(19) Europäisches Patentamt
European Patent Office
Office européen des brevets

(11) **EP 3 940 898 B1**

(12) **EUROPEAN PATENT SPECIFICATION**

(45) Date of publication and mention of the grant of the patent:
**21.06.2023 Bulletin 2023/25**

(21) Application number: **20185665.5**

(22) Date of filing: **14.07.2020**

(51) International Patent Classification (IPC):
*H01S 3/13* (2006.01)

(52) Cooperative Patent Classification (CPC):
**H01S 3/1303; H01S 3/1305; H01S 3/2391;**
H01S 3/0085; H01S 3/1304; H01S 3/1307

(54) **METHODS AND APPARATUSES FOR LASER STABILIZATION**

VERFAHREN UND VORRICHTUNGEN ZUR LASERSTABILISIERUNG

PROCÉDÉS ET APPAREILS DE STABILISATION LASER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**19.01.2022 Bulletin 2022/03**

(73) Proprietor: **Alpine Quantum Technologies GmbH 6020 Innsbruck (AT)**

(72) Inventor: **TAKEKOSHI, Tetsu 6020 Innsbruck (AT)**

(74) Representative: **Grünecker Patent- und Rechtsanwälte PartG mbB Leopoldstraße 4 80802 München (DE)**

(56) References cited:
**EP-A1- 2 530 431      CN-B- 103 887 700 US-A1- 2013 176 081**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

Embodiments of the present invention relate to the field of laser stabilization.

### BACKGROUND

There are many technical applications (e.g., quantum computing, quantum simulations, atomic and molecular experiments, spectroscopy, magnetic sensors, atomic clocks, etc.) that require light of two or more specific *"correct'* frequencies, each with high absolute frequency stability.

Chinese Patent Publication CN103887700B discloses a system to provide similar light.

For example, in the field of quantum computing, light of lasers with high frequency stability (e.g., 1MHz over 1s) is required to implement quantum gates when using trapped ions to represent qubits.

The part of the technical application that requires said light, e.g., a quantum computer, is henceforth also referred to as the *"application system"*.

The light may be provided by two or more lasers, henceforth also referred to as *"slave lasers"*. Thus, each of such slave lasers, is required to deliver light at a *"correct'* frequency and may have to be stabilized in order to maintain the correct frequency over a possibly long time period. Some application systems require many single-frequency lasers, each with high absolute frequency stability. As soon as there is a plurality of lasers, they all have to be separately stabilized using the known stabilization schemes. These may be become complex and large when independent references (e.g., frequency combs) are used for each laser. They may also be bandwidth-starved- and thus unable to reduce the linewidth of the lasers significantly (wavemeters, scanned cavities).

### SUMMARY

The above mentioned approaches may still suffer from complexity and low flexibility regarding the selection of the results to be simulated.

The present invention is defined by the independent claims. Some of the advantageous embodiments are subject matter to the dependent claims.

In some embodiments of the invention, an optical cavity is provided in order to stabilize a plurality of laser sources at the same time. In particular, the length of the cavity is set to a length at which frequencies of all respective laser sources are resonant or nearly resonant. Here, the term nearly resonant refers to a frequency which is easily correctable to be resonant with the cavity using conventional frequency shifting means, such as an acousto-optic modulator (AOM).

According to a first aspect of the present disclosure, the invention relates to a method for stabilizing simultaneously $N$ slave lasers in order to output stabilized light of $N$ respective mutually different predetermined frequencies $f_i^S$, $i = 1, \dots, N$. The method uses an optical resonator formed by two mirrors and includes a step of adjusting the distance between said two mirrors to a stabilization length. At the stabilization length, there is, for each predetermined frequency $f_i^S$, a resonant frequency $f_i^R$ of the optical resonator for which a difference between the predetermined frequency $f_i^S$ and the resonant frequency $f_i^R$ is smaller than a predetermined target value. The method further includes a step of feeding light from each of the $N$ lasers to the optical resonator, thereby generating $N$ respective error signals. Moreover the method includes a step of stabilizing simultaneously the $N$ lasers based on the $N$ error signals.

Stabilizing multiple slave lasers simultaneously using a single optical resonator may reduce the size, complexity, and/or cost for providing an application system with light of different stabilized frequencies.

According to an example, the distance between the two mirrors depends on a length of a spacer, located between the two mirrors, and the step of adjusting the distance between the two mirrors includes a step of adjusting the length of the spacer.

For example, the adjusting of the length of the spacer may include a step of adjusting a temperature of the spacer, and/or a step of adjusting a length of a piezo element of the spacer.

In general, the $N$ error signals may be generated based on output light, which is light output by the optical resonator, when fed with the light from the $N$ lasers.

Advantageously, the output light is output using, as the two mirrors a first mirror that has a highly-reflecting inner surface and a weakly-reflecting outer surface, and a second mirror that has a highly-reflecting inner surface and an anti-reflecting outer surface. This may give the output light an intensity spectrum with local characteristics. The method may then further include a step of determining, for a laser $j$ of the $N$ lasers, using one of the local characteristics, whether the laser $j$ is stabilized to the corresponding resonant frequency $f_j^R$.

Using local characteristics of the intensity spectrum to determine whether a laser is locked to the correct resonant frequency is an efficient method that may decrease the complexity of the system.

According to a first exemplary embodiment of the first aspect, the $N$ lasers are simultaneously stabilized to emit light at the respective resonant frequencies $f_i^R$. The method then further includes, for each laser $k$ of the $N$ lasers, a step of splitting the light emitted by the laser $k$ into a first beam and a second beam, wherein the second beam is the light from said laser $k$ that is fed to the optical resonator. Furthermore, the method then includes, for each laser $k$ of the $N$ lasers, a step of shifting a frequency of the first beam to the corresponding predetermined frequency $f_k^S$, thereby generating the stabilized light.

Using a configuration according to the first exemplary embodiment of the first aspect may be a particularly economical configuration because acousto-optic modulators (AOMs) can also be used to modulate the light power. AOMs are typically desired between the slave laser and the application system anyway as an ultrafast shutter and/or power regulating device.

According to a second exemplary embodiment of the first aspect, the $N$ lasers are simultaneously stabilized to emit light at the respective predetermined frequencies $f_i^S$. The method then further includes, for each laser $k$ of the $N$ lasers, the steps of splitting the light emitted by the laser $k$ into the stabilized light and feedback light. Furthermore, the method then includes, for each laser $k$ of the $N$ lasers, a step of shifting a frequency of the feedback light to the corresponding resonant frequency $f_k^R$. Moreover, the method then includes, for each laser $k$ of the $N$ lasers, a step of feeding the feedback light with the shifted frequency to the optical resonator.

Using a configuration according to the second exemplary embodiment of the first aspect may allow not shuttering the light on/off and/or may allow not modulating its intensity, which may allow to provide more power to the experiment.

In the first or second exemplary embodiment of the first aspect, the shifting of the frequencies may be performed using an acousto-optic modulator.

In some embodiments according to the first aspect, at the stabilization length, the optical resonator has further a resonant frequency that corresponds to a frequency of light of a reference laser. The method may then further include a step of stabilizing the distance between the two mirrors to the stabilization length by locking the distance to the reference laser.

Using a reference laser by locking the distance between the mirrors to the reference laser may increase the stability of the distance between the two mirrors which, in turn, may increase the stability of the slaver laser locked to the optical resonator formed by said two mirrors. In other words, the stability of the reference laser may be transferred, via the optical resonator, to the reference lasers.

For example, in particular if a reference laser is used, the distance between the two mirrors may depend on a length of a piezo element located between the two mirrors. The locking of the distance to the reference laser may then include a steps of feeding the light of the reference laser to the optical resonator, thereby generating a reference error signal. The length of the piezo element may then be repeatedly adjusting in a feedback loop based on the reference error signal.

According to a second aspect of the present disclosure, the invention relates to an apparatus for simultaneously stabilizing light from $N$ lasers at $N$ respective mutually different predetermined frequencies $f_i^S$, $i$ = 1, ... , $N$. The apparatus comprises an optical cavity including a spacer and two mirrors. The two mirrors are arranged to form an optical resonator for the plurality of predetermined frequencies, a distance between the two mirrors depends on a length of the spacer, and the length of the spacer is reversibly adjustable within a range of at least 40 μm.

An optical cavity with a spacer the length of which can be adjusted over a range of at least 40 μm, may facilitate adjusting the distance between the mirrors to a length (stabilization length), suitable for stabilizing multiple slave lasers simultaneously. This may reduce the size, complexity, and/or cost for providing an application system with light of different stabilized frequencies.

For example, the length of the spacer is adjustable by at least 40 μm by increasing or decreasing a temperature of the spacer; and/or adjusting a length of a piezo element of the spacer.

Advantageously, the spacer is substantially made of material(s) with a coefficient of thermal expansion that is larger than 16 ppm/°C, a stiffness larger than 10 GPa, and/or a damping tangent larger than 0.001.

For example, the spacer may be made of at least 99,8% magnesium.

Using Magnesium is as material for the spacer may be advantageous as it dampens mechanical vibrations much better than conventional spacer materials and may provide an integrated damping. Furthermore, magnesium has a rather high coefficient of thermal expansion, which advantageously results in a large length tuning range (for finding a stabilization length). This allows a small (and thus low capacitance, and fast) piezo to lock the cavity length to the reference laser.

In general, the optical cavity may further include a piezo element that is located between one of the two mirrors and the spacer, and the distance between the two mirrors may be adjustable by means of the piezo element.

A piezo element located between the two mirrors may allow to stabilize (dynamically adjust) the distance between the two mirrors based on dynamic feedback.

In general, a first mirror, which is one of the two mirrors, may have a highly-reflecting inner surface and a weakly-reflecting outer surface. Furthermore, a second mirror, which is that mirror of the two mirrors that is not the first mirror, may have a highly-reflecting inner surface and an anti-reflecting outer surface. The optical resonator may then be formed by the highly-reflecting inner surface of the first mirror and the highly-reflecting inner surface of the second mirror.

Using local characteristics of the intensity spectrum to determine whether a laser is locked to the correct resonant frequency is an efficient method that may decrease the complexity of the system.

According to a third aspect of the present disclosure, the invention relates to a system for outputting stabilized light. The system comprises the apparatus according to the second aspect of the present disclosure and a control circuitry configured to adjust the distance between the two mirrors to a stabilization length. At the stabilization length, there is, for each predetermined frequency $f_i^S$, a resonant frequency $f_i^R$ of the optical resonator for which a difference between the predetermined frequency $f_i^S$ and the resonant frequency $f_i^R$ is smaller than a predetermined target value.

Stabilizing multiple slave lasers simultaneously using a single optical resonator may reduce the size, complexity, and/or cost for providing an application system with light of different stabilized frequencies.

According to an exemplary embodiment of the third aspect, the control circuitry is configured to adjust the distance between the two mirrors to the stabilization length in accordance with a frequency of a reference laser.

Using a reference laser (e.g., by locking the distance between the mirrors to the reference laser) may increase the stability of the distance between the two mirrors which, in turn, may increase the stability of the slaver laser locked to the optical resonator formed by said two mirrors. In other words, the stability of the reference laser may be transferred, via the optical resonator, to the reference lasers.

In any of the above exemplary embodiment of the third aspect, the apparatus may comprise an optical input for feeding input light and thereby to generate $N$ error signals. The control circuitry may then further be configured to generate, based on the $N$ error signals, electronic feedback for the $N$ lasers.

In any of the above exemplary embodiment of the third aspect, the system further comprises one or more beam splitters for splitting light emitted by the $N$ lasers into a first beam and a second beam, wherein the second beam is the input light to be fed to the apparatus in order to the generate $N$ error signals. Furthermore, the control circuitry is then i) configured to stabilize simultaneously the $N$ lasers to emit light at the respective resonant frequencies $f_i^R$, and the system further comprises one or more frequency shifters for shifting frequencies of the first beam to the respective predetermined frequencies $f_i^S$; or ii) configured to stabilize or the control circuitry is configured to stabilize simultaneously the $N$ lasers to emit light at the respective predetermined frequencies $f_i^S$, and the system further comprises one or more frequency shifters for shifting frequencies of the second beam to the respective resonant frequencies $f_i^R$.

Details of one or more embodiments are set forth in the accompanying drawings and the description below. Other features, objects, and advantages will be apparent from the description, drawings, and claims.

BRIEF DESCRIPTION OF THE DRAWINGS

In the following embodiments of the invention are described in more detail with reference to the attached figures and drawings, in which:

Fig. 1       is a schematic drawing of an exemplary optical resonator;

Fig. 2       is a flow diagram illustrating exemplary steps performed for stabilizing simultaneously two or more lasers;

Fig. 3       is a graph illustrating an example of the cavity transmission of light of three different frequencies as a function of a cavity length;

Fig. 4       is a schematic drawing of an optical resonator;

Fig. 5       is schematic drawing of an optical arrangement for stabilizing two or more lasers simultaneously;

Fig. 6       is schematic drawing of a second optical arrangement for stabilizing two or more lasers simultaneously;

Fig. 7       is a schematic drawing of a stabilization system;

Fig. 8a      is a schematic drawing of a stabilization system using a reference laser for stabilizing the resonator length;

Fig. 8b      is a more detailed schematic drawing of the stabilization system of Fig. 8a;

Fig. 9a      is a schematic drawing of an optical resonator with two mirrors, each having a AR surface on the outer side and a HR surface on the inner side;

Fig. 9b      is a graph illustrating the intensity of light reflected from an optical resonator according to Fig. 9a as a function of the frequency of the incident light;

Fig. 10a is a schematic drawing of an optical resonator with a first mirror that has a WR (weakly-reflecting) surface on the outer side and a HR (high-reflection) surface on the inner side, and second mirror that has a AR (anti-reflection) surface on the outer side and a HR surface on the inner side; and

Fig. 10b is a graph illustrating the intensity of light reflected from an optical resonator according to Fig. 9b as a function of the frequency of the incident light.

In the following, identical reference signs refer to identical or at least functionally equivalent features.

DETAILED DESCRIPTION

In the following description, reference is made to the accompanying figures, which form part of the disclosure, and which show, by way of illustration, specific aspects of embodiments of the invention or specific aspects in which embodiments of the present invention may be used. It is understood that embodiments of the invention may be used in other aspects and comprise structural or logical changes not depicted in the figures. The following detailed description, therefore, is not to be taken in a limiting sense, and the scope of the present invention is defined by the appended claims.

For instance, it is understood that a disclosure in connection with a described method may also hold true for a corresponding device or system configured to perform the method and vice versa. For example, if one or a plurality of specific method steps are described, a corresponding device may include one or a plurality of units, e.g. functional units, to perform the described one or plurality of method steps (e.g. one unit performing the one or plurality of steps, or a plurality of units each performing one or more of the plurality of steps), even if such one or more units are not explicitly described or illustrated in the figures. On the other hand, for example, if a specific apparatus is described based on one or a plurality of units, e.g. functional units, a corresponding method may include one step to perform the functionality of the one or plurality of units (e.g. one step performing the functionality of the one or plurality of units, or a plurality of steps each performing the functionality of one or more of the plurality of units), even if such one or plurality of steps are not explicitly described or illustrated in the figures. Further, it is understood that the features of the various exemplary embodiments and/or aspects described herein may be combined with each other, unless specifically noted otherwise.

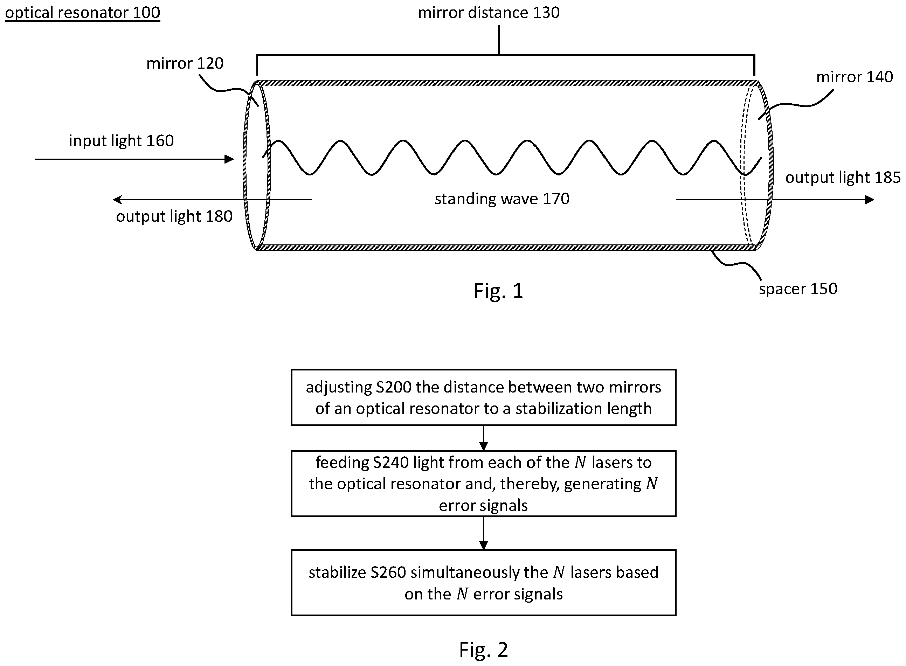

General principles of an optical resonator are now described with reference to Fig. 1.

**Fig 1**, is a schematic drawing of an optical resonator 100 formed by two mirrors 120 and 140. The mirrors are separated by a distance 130 and arranged such that that input light 160 that enters the resonator via one of the mirrors is reflects multiple times (back and forth) between the two mirrors. In other words, the mirrors are aligned such that light reflected by the inner side of one mirror will hit the inner side of the other mirror (this also defines the *"inner"* side of the mirror as the side directed to the respective other mirror). In particular, as shown in Fig. 1, in case of two flat mirrors, the mirror surfaces may be positioned in parallel to each other. Such optical oscillator is also referred to as optical cavity.

It is noted that, in general, an optical resonator/cavity may contain more than two mirrors. Furthermore, some or all of these mirrors may also have a curvature, e.g., to help aligning the light in the cavity. In other words, an optical resonator is in general an arrangement formed by two or more mirrors in which light (waves) can be confined by repeated reflection between the mirrors. Thereby, as further explained below, standing waves may be produced for specific frequencies.

It is noted that, in the present disclosure, the terms *"distance between the mirrors"*, *"mirror distance"*, *"resonator length"*, or *"cavity length"* and the like are used interchangeably. Furthermore, it is noted that the mirror distance does not necessarily refer to the actual distance between the mirrors or the actual length of the resonator/cavity, but rather to the effective length of an optical path of the optical resonator that determines (possibly together with other optical path lengths) the resonant frequencies of the optical resonator. More specifically, the effective length $\Lambda$ of an optical path for light propagating through a medium is given as the product

$$\Lambda = L n_\lambda,$$

where L is the geometrical length of the optical path, and $n_\lambda$ is the refractive index of the medium, which in general depends on the wavelength $\lambda$ of the light. Furthermore, in particular in case of a resonator formed by more than two mirrors (e.g., a ring resonator), the geometrical length of the optical path L of the resonator may not be the distance between two mirrors.

When entering the optical resonator, light of most frequencies will be suppressed due to destructive interference. Only light of some specific frequencies, henceforth referred to as resonant frequencies $f^R$, will experience constructive interference and be sustained (*"survive"*) in the resonator. In consequence, when light of a resonant frequency is fed to the optical resonator 100, a standing wave 170 of said resonant frequency will be formed between the mirrors. In other words, the amplitude of the standing wave resulting from input light of a given frequency depends on how close the given frequency is to a resonant frequency, and the amplitude of the standing wave of light of a frequency that is not (at least almost) resonant will be close to zero. More specifically, constructive interference may in general occur when the wavelength of the light fits in the round-trip length of the optical resonator.

In the following, for the sake of simplicity, the case of two mirrors as illustrated in Fig. 1 is assumed. In this case, the round-trip length may correspond to twice the distance Λ between the mirrors. Correspondingly, a resonant frequency $f^R$ is then a frequency for which a multiple $m \geq 1$ (where m is an integer) of half the wavelength $\lambda^R = c/f^R$ corresponding to said frequency $f^R$ fits between the mirrors. Mathematically, this condition, henceforth referred to as **resonance condition** may be written as

$$m \frac{\lambda^R}{2} = m \frac{c}{2f^R} = \Lambda,$$

where $\lambda^R$ is the wavelength of the light in vacuum, $f^R$ is the frequency of the light, and c is the speed of the light in vacuum. In other words, light (or a frequency/wavelength) is resonant with an optical resonator if (and only if) the above resonance condition can be satisfied with an integer $m \geq 1$.

In generic terms, the present invention employs single optical cavity for stabilizing a plurality of lasers fed to the cavity at the same time. In particular, the length of the cavity is selected so that the frequency of each of the plurality of lasers is resonant or nearly resonant with respect to the cavity. The cavity length may be controllable in order to compensate for possible length distortions due, e.g., to varying conditions of the environment.

According to an embodiment, a method is provided for stabilizing simultaneously N slave lasers in order to output stabilized light of N respective mutually different predetermined frequencies $f_i^S$, $i = 1, ... , N$. The method uses an optical resonator 100 formed by two mirrors 120, 140 and includes a step of adjusting S200 the distance 130 between said two mirrors 120, 140 to a stabilization length. At the stabilization length, there is, for each predetermined frequency $f_i^S$, a resonant frequency $f_i^R$ of the optical resonator 100 for which a difference between the predetermined frequency $f_i^S$ and the resonant frequency $f_i^R$ is smaller than a predetermined target value. The method further includes a step of; feeding S240 light from each of the N lasers to the optical resonator 100, thereby generating N respective error signals; and stabilizing S260 simultaneously the N lasers based on the N error signals.

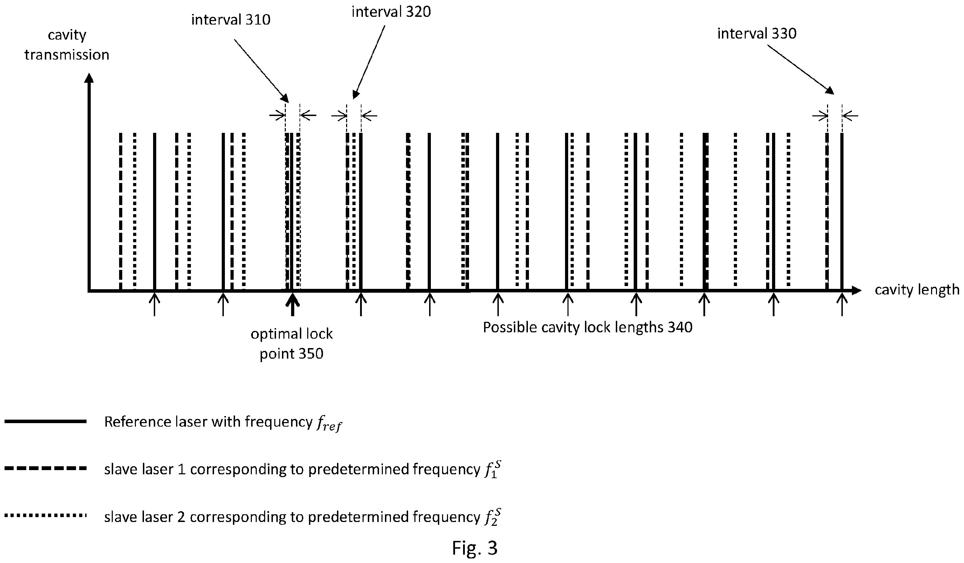

This method is now further described with reference to Fig. 2 and 3. It noted that the slave laser may in general be single-frequency lasers or multiple-frequency lasers. For the sake of simplicity, it is henceforth assumed that the slave lasers are single frequency lasers. However, the present invention equally applies to the stabilization of less than N slave lasers in order to output stabilized light of N mutually different predetermined frequencies $f_i^S$, $i = 1, ... , N$. Some or all of the less than N slave laser may then be multiple-frequency lasers and be associated with more than one of the predetermined frequency.

As shown in **Fig. 2**, in a first step, the distance of the two mirrors is **adjusted S200** to a stabilization length. In general, the stabilization length depends on the N **predetermined frequencies** $f_i^S$, which correspond to the *"correct"* frequencies mentioned above, i.e., may be specific frequencies required by an application system (with high stability).

As can be seen from the resonance condition mentioned above, which frequencies are resonant (and which are not) depends on the distance Λ between the two mirrors. In other words, by adjusting the distance between the mirrors, a given frequency can be made resonant (or non-resonant) with the optical resonator formed by said mirrors. However, for a given set of N predetermined frequencies $f_i^S$, there may in general be no (or, at least, no feasible in terms of the required/possible length of such cavity) resonator length for which all N predetermined frequencies $f_i^S$ are resonant.

This is illustrated in **Fig. 3**. More specifically, the y-axis in Fig. 3 shows the cavity transmission (ratio of the intensity of the transmitted output light to the intensity to the light injected into the cavity).

Each of the vertical lines in Fig. 3 (parallel to the y-axis labelled *"cavity transmission"*) corresponds to one of three mutually different frequencies and indicates that a maximum attainable transmission ratio. However, as a matter of fact, the graph of Fig. 3 has three continuous lines, each indicating the cavity transmission of one of the lasers as a function of cavity length. The resonance dips are so sharp that they look like vertical lines in the figure. More specifically, when nearing a cavity length for that the frequency of a laser becomes resonant, the curve of said laser actually goes up very fast (very shortly before the respective cavity length) and goes back down again very fast (very shortly before the cavity length). In other words, the transmission for each laser has very sharp peaks, but is zero between the peaks. In Fig. 3, the resonances appear as lines, but they are actually curved peaks with finite widths (1 or 2 MHz in our case). The peaks fall away to zero outside this width. This is known as the resonance width and is related to the "capture range" (also a few MHz). In contrast, the separation between adjacent peaks is usually of the order of 1GHz.

In other words, the frequency corresponding to a vertical line is resonant for the cavity length/mirror distance given by the horizontal position of said vertical line (i.e., the resonance condition is satisfied). In Fig. 3, two frequencies, $f_1^S$ and $f_2^S$, are predetermined frequencies and correspond to slave lasers, whereas one frequency, $f_{ref}$, is a reference frequency and corresponds to a reference laser.

It is noted that multiple lines in Fig. 3 pertaining to one frequency $f_i$ correspond to integer multiples of the cavity length $\frac{c}{2f_i}$. It is noted that, for a cavity length for which no line is drawn, none of the three frequencies is a resonant frequency. Furthermore, in Fig. 3, for a given mirror distance, at most one of the three frequencies is (exactly) resonant.

However, in general, there may be a distance between the mirrors at which all predetermined frequencies are, at least, nearly resonant with the cavity. Such a mirror distance for which all predetermined frequencies $f_i^S$ are nearly resonant with the cavity is henceforth referred to as **stabilization length** $\Lambda_s$. More specifically, at the stabilization length, there is, for each predetermined frequencies $f_i^S$, a corresponding resonant frequency $f_i^R$ of the resonator such that the difference between said predetermined frequency and corresponding resonant frequency $\Delta f_i^{RS} = f_i^R - f_i^S$ is smaller than some **predetermined target value T**, i.e., for each predetermined frequency $f_i^S$, $i \in \{1,2, \ldots, N\}$, there is a small frequency shift $|\Delta f_i^{RS}| = \leq T$, such that the following condition, henceforth referred to as **stabilization condition**, is satisfied:

$$m_i \frac{c}{2(f_i^S + \Delta f_i^{RS})} = \Lambda_s,$$

where each $m_i$ is an integer equal to or greater than one.

In general, this predetermined target value T may depend on the means which may be used to post-correct the stabilized frequency (e.g. frequency shifting means) before inputting it to the application system. Typical values for T are between 40 and 300 MHz.

In other words, at the stabilization length, small deviations $\Delta f_i^{RS}$ from the predetermined frequencies $f_i^S$ cause the slave lasers (or the light fed to the resonator) to become resonant with the resonator. Thus, the effective path length of an optical resonator is varied until a length is reached where the differences between the predetermined frequencies and respective nearest cavity resonances is below a maximum acceptable value.

Here, the small differences are differences which do not substantially jeopardize resonance behavior and/or deviations which are correctable, e.g. available by means of frequency shifting devices. For instance, one low frequency acousto-optic modulator (AOM) may be used as a shutter. For example, the differences can be corrected using an efficient frequency shifting AOM to cover (80 ± 20) MHz. The maximum value depends on the technical approach and the efficiency to create the frequency-shifted beam. In general, it's more complicated to have larger gaps as it means higher RF frequencies in the shifters (low efficiencies and higher apertures/more complicated, lossy coupling optics), multiple shifters, or using EOMs instead of AOMs. EOMs cannot shift and act as a light shutter in the main output beam simultaneously. Currently, the AOMs which are efficient and easy to work with are 40 to 300MHz. In Fig. 3, this corresponds to the condition that each frequency $f_i^S$ is resonant for a cavity length that is not farther away from the stabilization length than $\Delta\Lambda_i = \Lambda_s T / f_i^S$, i.e., satisfies the corresponding condition, henceforth referred to as "stabilization condition":

$$\left| m_i \frac{c}{2 f_i^S} - \Lambda_s \right| \leq \Delta\Lambda_i$$

It is further noted that, for a given set of frequencies there may be multiple stabilization lengths for which the N stabilization conditions can be satisfied. More specifically, a set of predetermined frequencies $f_i^S$ and a target value T usually defines one or more intervals in which the above N stabilization conditions can be satisfied.

This is further explained with reference to Fig. 3. In Fig. 3, the arrows 340, labelled "possible cavity lock lengths" indicate cavity lengths at which the reference frequency $f_{ref}$ is exactly resonant with the optical resonator. The bold arrow 350, labelled "optimal lock point" indicates a cavity length at which a) the predetermined frequencies $f_1^S$ and $f_2^S$ are nearly resonant with the cavity and b) the reference frequency $f_{ref}$ is exactly resonant with the optical resonator. It is noted that, a frequency that is "exactly resonant" is a frequency that satisfies the resonance condition, whereas a frequency that is "nearly resonant" is a frequency that merely satisfies the corresponding stabilization condition.

In general, there may be multiple optimal lock points that satisfy condition a) and b). Furthermore, it is noted that usage of a reference laser, which is further explained below, is purely optional. If no reference laser is used, one of the slave laser may, in the determining of the stabilization length, be treated as the reference laser, i.e., the stabilization length may be determined such that one of the predetermined frequencies is exactly resonant at the stabilization length. Alternatively, the stabilization length may be determined such that none of the predetermined frequencies is necessarily exactly resonant at the stabilization length. Furthermore, in the determining of the stabilization length, the reference laser may be treated as the slave lasers, i.e., the stabilization length may be determined such that neither the reference frequency nor a predetermined frequency are necessarily exactly resonant at the stabilization length.

For instance, dropping the condition that the reference frequency is exactly resonant, would allow for a stabilization length in the interval 310 that is moved slightly away from the optical lock point 350. Furthermore, it would allow for a stabilization length around the centers of the intervals 320 and 330. In case of interval 320, the stabilization length may be determined such that the predetermined frequency $f_1^S$ (dotted lines) is exactly resonant at the stabilization length.

The stabilization length may then be selected according to some other criterion. For instance, a stabilization length that minimizes the maximal difference $max(\Delta f_1^{RS}, \Delta f_2^{RS}, ..., \Delta f_N^{RS})$ between a predetermined frequency and the corresponding resonant frequency may be selected. Alternatively, the stabilization length may be selected such that the average difference between predetermined frequencies and corresponding resonant frequencies becomes minimal, the length in the middle of an interval may be selected, or a stabilization length for which one of the frequencies is exactly resonant with the cavity may be selected.

A stabilization length may, for instance, be found by tuning the resonator length over a sufficient range, e.g. 40 μm. With regard to the particular application defining the stability requirement and to the desired laser frequencies, the required cavity length and variation of the length may be pre-calculated. This may also take into account the operation environment including typical temperature range and other, e.g. mechanical conditions.

More specifically, in order to determine the stabilization length, the frequency spectrum of each slave laser near its *"correct frequency"* $f_i^S$ may be measured for a small number of cavity lockpoints. Here a cavity lockpoint may correspond to a fixed, but arbitrary, spacer temperature and, thus, to a fixed, but arbitrary, distance between the mirrors. If a reference laser is used, the cavity lockpoints are such that the reference laser is resonant with the cavity at the lockpoints, but otherwise still arbitrary.

For each lockpoint, the frequency spectrum of a slave laser may be measured, using a wavemeter for measuring frequencies, as follows: The frequency of the slave laser is varied (near its frequency $f_i^S$) and locked to the cavity at at least three adjacent resonances. In this way, one finds the frequency spectrum, i.e., a series of frequencies of the slave laser that are resonant with the optical cavity at the current lockpoint.

The spectrum measurement may be performed for all slave lasers, while keeping the lockpoint fixed. Then, the cavity length may be increased (or decreased), i.e., the lockpoint may be changed, and a spectrum measurements may be performed for all slave lasers at the new lockpoint, whereat the lockpoint is again kept fixed during the measurements. Such spectrum measurements may be performed for several lockpoints and each slave laser. From these numbers, it is possible to extrapolate the frequency spectrum for slave lasers at lockpoints that have not been measured. The extrapolation can be done, for instance, based on the periodicity measured for each laser (said periodicity can also be observed in Fig. 3). Thus, the expected available slave frequencies for each reference laser cavity lockpoint can then be predicted, which, in turn allows estimating the stabilization length.

For example, there may be 20 lockpoints, labelled 0, 1, 2, ... , 20, according to the corresponding cavity length, where 0 is, e.g., the shortest cavity length and 20 the largest cavity length. The spectrum data may be taken, for instance, for the three shortest lockpoints (cavity lengths) 0, 1, and 2. An extrapolation simulation, performed based on the measurements at lockpoints 0 to 2, may then shows that lockpoint 15 has favorable conditions where the slave lasers are very close to their *"correct'* values. The spacer temperature is then increased by roughly the right amount to reach the length required for lockpoint 15.

It is noted that, in the present example, the frequency spectra of only a (small) subset of lockpoints are measured, and the frequency spectra of the remaining lockpoints are determined by means of an extrapolation (e.g. a calculation) based on the measured spectra. However, the present invention is not limited thereto and all lockpoints may be explicitly measured, which may allow to forego the extrapolation. However, measuring only at a few neighboring lockpoints may allow to reach said neighboring lock points by using a fast piezo element with a small maximum length adjustment. In other words, in the present example, for the spectrum measurements at different lockpoints only a piezo element may be used to change the cavity length to the different lockpoints. This piezo may be a piezo element with a small maximum length adjustment and, thus, it may allow to reach only a few different lockpoints. The spectrum at the other lockpoints may then be determined based on an extrapolation that uses the measured spectra. This may advantageous as adjusting the cavity length over a large range, in particular by means of a temperature adjustment or slow piezo, with large small maximum length adjustment, may take some time.

After adjusting the distance between the mirrors (roughly) to the estimated stabilization length; the slave lasers may be locked to the optical resonator, and the wavemeter may be used to measure the slave laser frequencies. The measured slave laser frequencies can then be used to determine the current lockpoint, because they will match the simulation. In case the current lockpoint is not the estimated lockpoint (e.g., not lockpoint 15, but rather lockpoint 14 or 16), the mirror distance can be changed by a small amount in order to reach the estimated lockpoint. However, please note that this approach is only exemplary and that the stabilization length determination may be performed in a different manner.

In general, the distance 130 between the two mirrors 120, 140 may depend on a length of a spacer 150, located between the two mirrors 120, 140. The adjusting S200 of the distance 130 between the two mirrors 120, 140 may then include a step of adjusting the length of the spacer 150. For instance, the length of the spacer 150 may be adjusted by adjusting a temperature of the spacer 150. Alternatively or in addition, the spacer may, for instance, include a piezo element, and the length of the spacer may be adjusted by adjusting the length of the piezo element.

It is noted that, in some embodiments, the piezo element used for the adjusting the cavity length may be adjustable over a larger range, e.g. about 40 $\mu$m. This may result in a slower reaction of the element. Thus, in some embodiments, a piezo element other than the piezo element used for the adjusting, may be used for the stabilizing. Such other element may be different, e.g. in order to be faster, it can have a smaller maximum length adjustment of e.g. 2$\mu$m.

Correspondingly, an apparatus for simultaneously stabilizing light from N lasers at N respective mutually different predetermined frequencies $f_i^S$, $i = 1, \ldots,$ N is provided. The apparatus comprises an optical cavity including a spacer 150 and two mirrors 120, 140. The two mirrors 120, 140 are arranged to form an optical resonator for the plurality of predetermined frequencies. The distance (e.g., the effective length of the optical path) between the two mirrors depends on the length of the spacer, and the length of the spacer is reversibly adjustable within a range of at least 40 $\mu$m. Advantageously, in order to find a stabilization length, the length of the cavity can be tuned over a sufficient range. For instance, the length of the spacer may be adjustable by at least 40 $\mu$m by increasing or decreasing a temperature of the spacer 150.

In the present disclosure, a **spacer** refers to any physical means to which the mirrors are directly or indirectly coupled or attached and on which the distance between the mirrors depends.

For instance, in the example of Fig. 1, the spacer 150 corresponds to the sidewall of the cylindrical form providing housing to the cavity, and the mirrors are attached directly at the two ends of the cylindrical spacer. Thus, the spacer may correspond to the housing or be a part of the housing of the optical resonator and/or of the mirrors. However, instead of being attached directly to the spacer, one or all of the mirrors of the optical resonator may also be attached/fixed directly to some other respective physical entities (e.g., a mounts, holders, or other parts of the cavity/tube than the spacer). There may also be other components (some of which may also have an optical function) that are inserted between the mirrors.

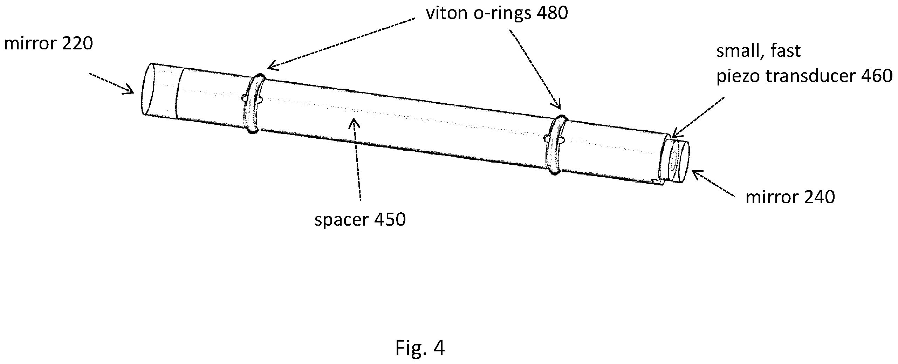

Any component inserted between the mirrors may be seen as a spacer. For instance, as shown in Fig.4, there may be a piezo transducer 460 between the mirrors. In other words, the piezo transducer 460 represents on its own a spacer. Rings 480 serve as vibration isolation and mount for the cavity inside the chamber in this particular exemplary implementation. They are not spacers, as they are only on the outside of the spacer, rather than sandwiched into the spacer. For example, they can be made of Viton rubber or any other material which absorbs vibrations.

In general, some components inserted between the mirrors may be length-adjustable and other components may not be length-adjustable. For instance, if a piezo element is used to adjust the distance between the mirrors to the stabilization length, the other components (e.g., the spacer 450) may be rigid components. Here, a rigid component refers to a component made of a material with a low coefficient of thermal expansion in order to make the cavity length insensitive to temperature changes. For instance a rigid spacer may be made of quartz, with a coefficient of thermal expansion of 0.55ppm/°C (at roughly 25°C).

Thus, the distance (i.e., optical path length) between the mirrors may in general also depend on the length of other components and/or on other properties, such as the pressure of gas in the cavity.

In general, when increasing/deceasing the temperature of the (temperature-controllable) spacer, the length of the spacer and, thus the distance between the mirrors will increase/decrease. Therefore, the temperature of the cavity may be tuned to adjust the cavity length to the stabilization length. The temperature of the spacer may be adjusted, for instance, using a heating wire wrapped around the spacer. Alternatively or in addition, the temperature of the spacer may be adjusted by exposing the spacer to radiation (e.g., heating the spacer by means of infrared light). Furthermore, in order to stabilize the temperature, the spacer may be thermally isolated from the environment by placing it in vacuum.

Therefore, advantageously, the spacer is substantially made of material(s) with a coefficient of thermal expansion that is larger than 16 ppm/°C (e.g., at 25°C), an elastic modulus larger than 10 GPa, and/or a damping tangent larger than 0.001.

Here, the coefficient of thermal expansion may be a volumetric coefficient $\alpha_V = \frac{1}{V}\left(\frac{\partial V}{\partial T}\right)$, an area thermal expansion coefficient $\alpha_A = \frac{1}{A}\left(\frac{\partial A}{\partial T}\right)$, or a linear ex-

pansion coefficient $\alpha_L = \frac{1}{L}\left(\frac{\partial L}{\partial T}\right)$ , where V, A, and L respectively denote the volume, an area, and a length of the material. Thus, the value 16 ppm/°C given above for the coefficient of thermal expansion refers to a relative change the dimension(s) of the material per temperature change.

Furthermore, (tensile) elastic modulus or Young's modulus $E = d\sigma$ is the ratio of the stress amplitude $\varepsilon$ and the strain amplitude $\sigma$, where the stress amplitude $\varepsilon$ is a force $F$ per unit square $A$ of the material, $\varepsilon = \frac{F}{A}$ , and the strain amplitude $\sigma$ is the relative deformation of the material in response to said force $\sigma = \delta/L$ ($\delta$ denoting the absolute deformation in one direction, and $L$ the absolute length of the material in said direction before said force/deformation). It is noted that the stiffness $k$ is defined as the ratio of force and deformation $k = \frac{F}{\delta}$ , and thus related to the elastic modulus according to $k = E\frac{A}{L}$ .

Moreover, the damping tangent tan $\tan\delta = \frac{E''}{E'}$ , where $\delta$ is also known as the loss angle, may be defined as the tangent of the ration the loss modulus $E''$ and the storage modulus $E'$ (note that loss and storage modulus are related to the elastic modulus according to $E^* = E' + iE''$, where $i$ is the imaginary unit). The damping tangent tan $\delta$ indicates a fractional energy loss and thus provides a measure of damping in the material.

In general, the spacer is preferably made of material(s) with a high damping, elastic modulus, and/or high stiffness. Furthermore, the space is preferably made of a material with a high coefficient of thermal expansion, e.g., a metal or similar material. For instance, the spacer may be made of at least 99,8% magnesium, or, alternatively the spacer may be made of aluminum, which has a favorable thermal expansion but only mediocre damping in comparison with Mg. In general, the cavity, parts of the cavity, a baseplate, and/or the spacer may be made of high purity Mg, e.g., with a mass percentage of $\geq$ 99.8% magnesium. Magnesium is not as stiff as quartz but damps mechanical vibrations much better than conventional spacer materials. More specifically, due to the mechanical properties of the Mg, the optics fastened to this structure benefit from damping of unwanted relative vibrational motion caused by the environment. In other words, using magnesium therefore provides an integrated damping. Furthermore, magnesium has a rather high coefficient of thermal expansion, which advantageously results in a large length tuning range (for finding a stabilization length). This allows a small (and thus low capacitance, and fast) piezo to lock the cavity length to the reference laser.

Furthermore, Mg is more vacuum-compatible than conventional damping materials like lead. More specifically, other metals like lead or zinc (contained in some aluminum alloys) have a higher vapor pressures than other metals at room temperature, i.e., they vaporize much more than other metals (in particular, more than Mg). When using ion pumps (small, no vibrations, no maintenance) to generate very low pressures (ultrahigh vacuum, a.k.a. UHV), this is unsuitable because Lead and Zinc would deposit in the pump, reducing its lifetime and reducing the pumping speed by shorting the electrodes. Furthermore, the vapor from Lead and Zinc might coat the mirrors of the cavity, changing their properties.

In general, the length of the spacer may also be adjusted by adjusting the length of a piezo element. The length of the piezo element may be adjusted by applying a voltage to the piezo element. However, it is to be noted, that the present invention is in general not limited to any particular method to adjust the effective optical path length between the mirrors.

After the mirror distance has been adjusted to a stabilization length, the mirror distance is controlled, i.e. kept fixed (at the stabilization length) during the following steps (e.g., for the stabilization of the N lasers). For instance, by fixing the temperature at the temperature at which the resonator length corresponds to/equals one of these stabilization lengths, the resonator length may be set to a stabilization length. The temperature may be fixed based on feedback provided by a sensor that measures the temperature of the spacer.

In a second step, the light of the N slave lasers is **fed S240** to the optical resonator. Correspondingly, the optical resonator may comprise an optical input for feeding input light to the optical resonator and, thereby, to generate N error signals. For instance, the light may be fed to the optical resonator via one or both of the two mirrors. More specifically, the light from the slave lasers is simultaneously coupled into the optical resonator. For instance, all slave laser beams may be combined, and then coupled simultaneously into the cavity (e.g., via one/a single mirror). In other words, the input light that is fed to optical resonator may include light from each of the N slave lasers. It is further noted that the N slave lasers may correspond to the N (mutually different) predetermined frequencies $f_i^S$ in a one-to-one correspondence. In particular, the slave lasers may be single frequency lasers. It is further noted that, in the present disclosure, the terms *"fed to", "injected into", "coupled into",* and *"directed to"* the optical resonator are used interchangeably.

By feeding the light of the N slave lasers into the optical resonator, N error signals are **generated** (simultaneously). In particular, for each of the predetermined frequencies $f_i^S$ , a corresponding error signal is generated. For instance, the N **error signals** may be generated based on light output by the optical resonator, when fed with the light from the $N$ slave lasers. The $N$ error signals together may be considered to form a single error signal composed of parts contributed by the $N$ respective light sources.

More specifically, neglecting for now the width of the mirrors, when light enters the resonator, it will be reflected back and forth between the mirrors, interfere with itself, and generate (for frequencies that are sufficiently close to a resonant frequency) standing waves. The light may leave the optical resonator through one or both of the mirrors. Such light output by the optical resonator, when fed with light, is henceforth referred to as *"output light"*.

As illustrated in Fig. 1, there may be output light 180 as well as output light 185. More specifically, output light 180 is light that leaves the optical resonator from the input mirror (mirror 120), which is that mirror through which it was fed into the optical resonator. Such light is henceforth referred to as *"reflected output light"*. It is noted that the reflected output is a superposition of light leaving the optical resonator via (or through) the input mirror and light directly reflected at the input mirror, which usually interfere destructively. Output light 185, on the other hand, is light that leaves the optical resonator via the respectively other mirror (mirror 140). Such light is henceforth referred to as *"transmitted output light"*. The ratio between reflected and transmitted output light depends on the reflection/transmission of both mirrors as well as on the optical path length between mirrors and the wavelength of the light.

In general, the $N$ error signals may be based on reflected output light and/or transmitted output light. Some error signals may be based on reflected output light, whereas other error signals may be based on transmitted output light.

For each slave laser and, thus, each of the predetermined frequencies $f_i^S$, there is light fed to the optical resonator, in the present disclosure referred to as *"input light"*. For each input light, there will be a corresponding error signal (or a corresponding part of the single error signal). Correspondingly, for each slave laser, there will be a corresponding error signal.

More specifically, when input light of a specific frequency is fed to the optical resonator, the resonator will start outputting corresponding output light, which in general will be light of said specific frequency. The intensity, amplitude and phase of both, transmitted and reflected output light of said specific frequency will depend on whether said input light is resonant with the optical resonator. For instance, when the frequency of said input light moves away from a resonant frequency, the amplitude as well as the intensity of the corresponding transmitted output light may decrease, whereas the amplitude/intensity of the of the corresponding reflected output light may increase. Thus, the intensity and/or the amplitude of the corresponding output light indicates a deviation (e.g., a frequency difference) of the frequency of said input light from the resonant frequency. However, preferably, a method that detects the phase, such as the Pound-Drever-Hall (PDH) locking method, described below, is used for generating an error signal based on the output light. This has the advantage that the obtained error signal is not sensitive to changes in the input light power.

Since the frequency of the input light depends directly on the frequency of the light emitted by the laser, the output light also indicates a frequency difference of the light emitted by that laser that corresponds to the input light from a target frequency of said laser.

In summary, the optical resonator outputs simultaneously one optical error signal for each slave laser with no polling or dead time. More specifically, the interaction of each slave laser with the cavity produces a frequency-dependent error signal, which is observable in the reflected or transmitted slave laser light by conventional methods. The simultaneous nature of the error signals generation means that the slave laser lock bandwidths, and linewidth reduction are similar to those achieved for normal cavity locks. Thus, the optical cavity acts as an (absolute) *reference cavity* for all coupled slave lasers simultaneously (with no polling or dead time).

In general, a reference cavity is a passive optical resonator, which is used as a short-term frequency reference. The optical frequency of a laser can be stabilized to the frequency of a resonance of the reference cavity, effectively transferring the higher frequency-stability of the cavity to the laser. Compared with a laser resonator, a passive reference cavity can be significantly more stable, as it does not have the disturbing influences introduced by a gain medium. Such stabilization or frequency locking can be achieved, e.g., with an electronic feedback system based on the Pound-Drever-Hall method or the Hänsch-Couillaud method.

Accordingly, in a third step, the $N$ slave lasers are **stabilized S260** using the $N$ error signals (e.g., based on the N error signals).

As mentioned above, the $N$ slave lasers may correspond to the $N$ predetermined frequencies $f_i^S$ in a one-to-one correspondence. However, it is to be noted that, when stabilizing the slave lasers based on the N error signals, the slave lasers are not necessarily stabilized to emit light at the predetermined frequencies $f_i^R$. In general, the N slave lasers may be stabilized to emit light at $N$ respective frequencies, henceforth referred to as *"target frequencies $f_i^T$"*. In other words, for each of the $N$ slave lasers, there may be a (e.g., one or a single) corresponding target (emit) frequency $f_i^T$ at which the laser is to emit light, and/or each slave laser is stabilized so as to emit light of one of the $N$ target frequencies $f_i^T$

For each slave laser, a beamsplitter may send one part of the slave laser light to the optical resonator and one part to the application system. More specifically, one or more beamsplitters may be used to split the light emitted by the slave lasers into two parts, henceforth referred to as *"feedback light"* and *"system light",* respectively.

The system light is sent to the application system; whereas the feedback light is sent to a system, henceforth referred to as *"stabilization system"*.

In general, the **stabilization system** may include the optical resonator (the reference cavity) and adjust, based on the input of a set of predetermined frequencies, the optical path length (or cavity length) between the mirrors to a stabilization. Thereafter, based on feedback light, the $N$ error signals may be generated in the stabilization system. More specifically, the stabilization system may generate the error signals and/or the electronic feedback for the slave laser dynamically in a feedback loop. By providing electronic feedback to the slave laser and/or slave laser controllers, the stabilization system may stabilize the $N$ lasers, e.g., by locking them to the length of the optical cavity. In particular, the stabilization system may output control signals for controlling the slave lasers and/or the stability of the slave lasers. When stabilizing the slave lasers, the stabilization system may also keep the optical path length fixed at the stabilization length (e.g., by controlling the temperature of a spacer and/or locking the cavity length to a reference laser, as described below). This may allow to achieve absolute slave laser drift rates under, for instance, 0.1 Hz/s with four slave lasers. All while maintaining high lock bandwidth - i.e. reducing the linewidth of the slave lasers. Some or all of the above functions may be provided by the same or different processing or control circuitries included in the stabilization system.

For instance, the stabilization system may comprise a control circuitry configured to adjust the distance between the two mirrors to a stabilization length. At the stabilization length, there is, for each predetermined frequency $f_i^S$, a resonant frequency $f_i^R$ of the optical resonator for which a difference between the predetermined frequency $f_i^S$ and the resonant frequency $f_i^R$ is smaller than a predetermined target value. The stabilization system may also comprise a control circuitry that is configured to generate, based on the N error signals, electronic feedback for the $N$ lasers.

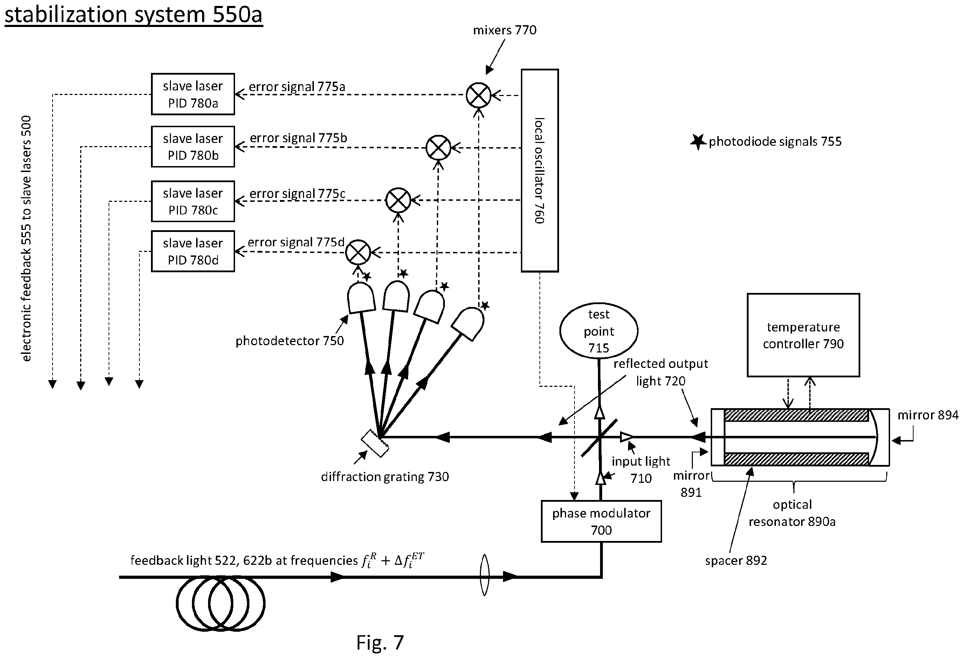

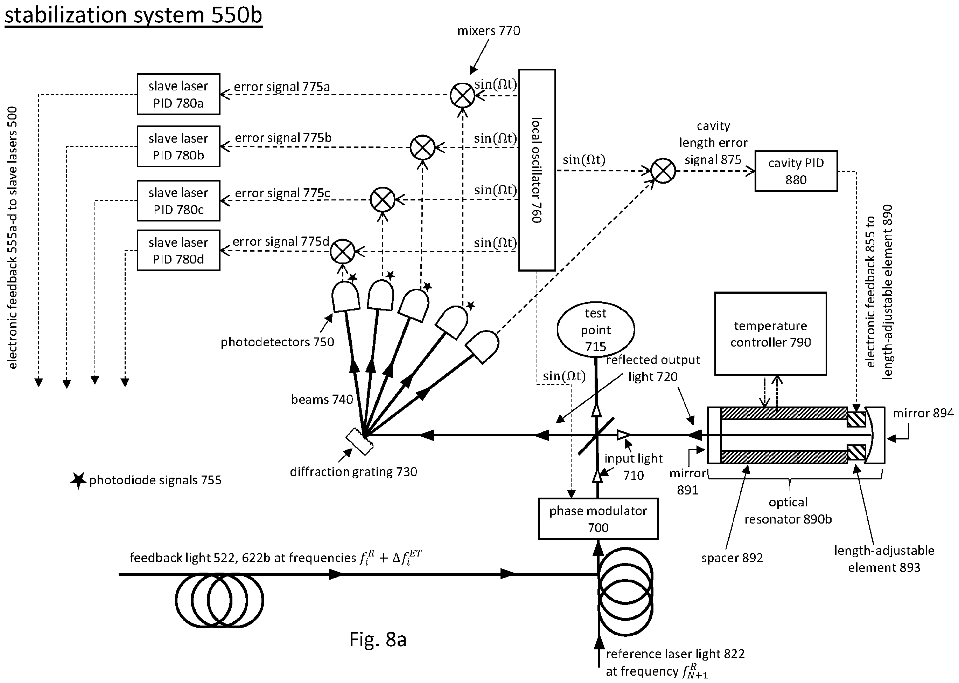

Two exemplary implementations of a stabilization system are described further below with reference to Fig. 7 and Fig. 8a, respectively.

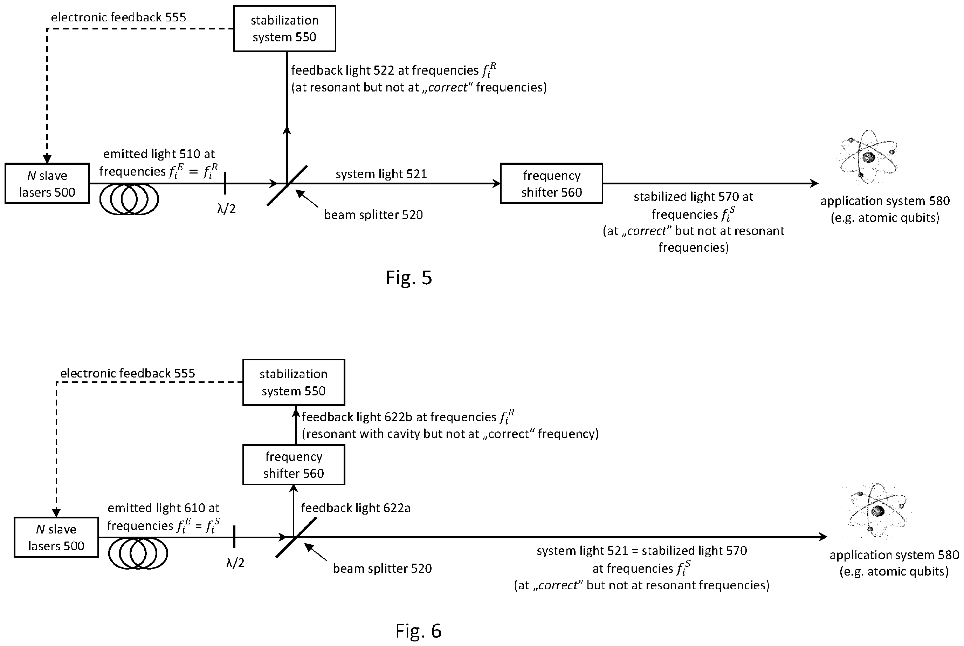

In general, the *feedback light* is used, in the stabilization system, to generate the input light, which is fed to the optical resonator. For instance, the feedback light may be the input light. However, in general the target frequency $f_k^T$ of the k-th laser may be different than the corresponding resonant frequency $f_k^R$. Before feeding it to the optical resonator, the frequency of the corresponding feedback light, split from the light emitted by said laser, may then be up-or downshifted to the resonant frequency $f_k^R$. In other words, in order to generate the input light corresponding to a laser, the feedback light of said laser may be shifted to a resonant frequency. This is described further below with reference to Fig. 6, where the frequency shifter 560 shifts the feedback light 622a, which is one of the beams obtained by splitting the light 610 emitted by the lasers 500, to the resonant frequencies $f_i^R$, thereby generating the feedback light 622b.

It is noted that, as a first possibility, this up- or downshifting may be performed in the stabilization system. Alternatively, as a second possibility, the stabilization system may be provided with feedback light shifted from the target frequencies $f_i^T$ to the corresponding resonant frequencies $f_k^R$. In other words, the frequency-shifting from the target frequencies to the resonant frequencies may be performed between the beamsplitter(s) and the stabilization system. As a third alternative, the slave lasers may be stabilized at the resonant frequencies, i.e., $f_i^T = f_i^R$. As a fourth alternative, a part of the shifting may be done between the beam splitter(s) and the stabilization system and the other part of the shifting may be done in the stabilization system.

Furthermore, the input light may in general be feedback light. However, the present invention is not limited thereto. Only a part of the feedback light may be fed to the optical resonator. Alternatively or in addition, in order to generate the input light from the feedback light, the feedback light may also be phase and/or amplitude modulated (as, for instance, in the Pound Drever-Hall technique described below).

The *system light,* on the other hand, is in general used to generate the light of the predetermined frequencies $f_i^S$, required by the application system, henceforth referred to as *"stabilized light"*. For instance, the system light may be the stabilized light. However, in general the target frequency $f_k^T$ of a laser may be different than the corresponding predetermined frequency $f_k^S$. Before providing it to the application system, the frequency of the corresponding system light, split from the light emitted by said laser, may then be up- or downshifted to the corresponding predetermined frequency $f_k^S$. In other words, in order to generate the stabilized light corresponding to a laser, the system light of said laser may be shifted to a predetermined frequency. It is further noted that the stabilized light, output to the application system, is not to be confused with the output light referred to above, output by the resonator when fed with input light.

For instance, the frequencies may be shifted using an acousto-optic modulator. In general, an acousto-optic modulator (or another frequency shifting device, with a high stability and accuracy, such as an electro-optic modulator (EOM)) may be inserted either between the beamsplitter and the application system, or between the beamsplitter and the optical resonator (or the stabilization system).

This bridges the small gap remaining between the cavity resonance and the correct frequency. Were we not at the stabilization length, these gaps would be large and technically challenging and/or expensive to bridge.

More specifically, as mentioned above, the stabilization length is chosen such that differences between predetermined frequencies and corresponding resonant frequencies is smaller than the predetermined target value: $|f_i^R - f_i^S| = |\Delta f_i^{RS}| \leq T$. The lasers are stabilized to emit light at the target frequencies $f_i^T$. Thus, in order to generate the feedback light, light emitted by the lasers may have to be shifted by a shift of size $\Delta f_i^{RT} = f_i^R - f_i^T$. Furthermore, in order to generate the stabilized light, light emitted by the lasers may have to be shifted by a shift of size $\Delta f_i^{ST} = f_i^S - f_i^T$. If the target frequencies of the lasers $f_i^T$ are chosen anywhere between the predetermined frequencies and the corresponding resonant frequencies, the maximum gap that has to be bridged with these shifts will be smaller than the predetermined target value T, i.e., one obtains

$$\max(|f_i^S - f_i^T|, |f_i^R - f_i^T|) \leq T.$$

Thus, the predetermined target value may be chosen such that the resulting frequency gaps $\Delta f_i^{RT}$ and $\Delta f_i^{ST}$ are small enough to be bridged easily. Since small frequency shifts of light can be done with high accuracy (and stability), the error signals will then essentially be only due to deviations of the frequencies of the lasers from the respective target frequencies. Thus, even when the target frequency $f_i^T$ of a laser differs from the corresponding resonant frequency $f_i^R$, the error signal can be used to identify small deviations of the laser frequency away from the target frequency $f_i^T$.

It is noted that, using an error signal, such as the one generated by the Pound Drever-Hall (PDH) technique, it may be possible to compensate not only the DC errors but also the AC errors. In particular, when the error signal bandwidth is large enough, it may be possible to correct very fast AC changes (mostly due to acoustical vibrations in the laser cavity) in the laser frequency, which may allow to narrow the linewidth of the laser. More specifically, the frequencies at which the N lasers actually emit light, henceforth referred to as **"emit frequencies $f_i^E$ "**, may differ by deviations $\Delta f_i^{ET} = f_i^E - f_i^T$ from the target frequencies. In other words, the N lasers may actually emit light at frequencies $f_i^E = f_i^T + \Delta f_i^{ET}$. Then, the light provided to the application system will be shifted to the frequencies $f_i^S + \Delta f_i^{ET}$, and light to be fed to the optical resonator will be shifted to the frequencies $f_i^R + \Delta f_i^{ET}$. Since the light fed to the optical resonator differs from the resonant frequency by the same frequency differences $\Delta f_i^{ET}$ as the emitted light from the target frequencies, the error signals generated in the stabilization system will then indicate these frequency deviations $\Delta f_i^{ET}$. The stabilization system may then provide respective electronic feedbacks to the N laser sources so as to counteract said deviations. It is noted that the PDH technique, a method for generating the error signals and/or the electronic feedback for the slave lasers, is described below with reference to Fig. 7.

In general, non-zero **deviations $\Delta f_i^{ET}$** (and, consequently, non-zero error signals) may be caused by an unlocked lasers. In particular, when first closing the loop, until the lasers have been locked to resonant frequencies, there is dynamic behavior which may be represented by the deviations $\Delta f_i^{ET}$.

Furthermore, non-zero deviations $\Delta f_i^{ET}$ may be caused by noise, drift, DC offset, and/or specific perturbations (e.g., concussions). In general, such deviations $\Delta f_i^{ET}$ may also emerge after locking the lasers. Usually, once the lasers are locked, there will only be fast temporary deviations (frequency noise) and a small DC offset due to the fact that the feedback gain is not infinite (or other technical reasons). In other words, once the feedback loop is closed, there will only be small residual deviations $\Delta f_i^{ET}$ due to deviations from ideal behavior (in particular, deviations from ideal frequency stability of the laser). Therefore, in the context of locked lasers, the deviations $\Delta f_i^{ET}$ may henceforth also be referred to as **"deviations from ideal behavior"** or *"residual deviations"* as they may still be there after locking the lasers. These residual deviations, which include effects such as noise, drift and a DC offset, are usually very small and only temporary (*"fluctuations"* or *"perturbations"*) as they are immediately counteracted based on the electronic feedback.

For example, the N slave lasers may be simultaneously stabilized to emit light at the respective resonant frequencies $f_i^R$. For each laser *k* of the *N* slave lasers, the light emitted by the slave laser *k* may be split into a first beam and a second beam. The second beam may be the light from said laser *k* that is fed to the optical resonator. Furthermore, for each laser *k* of the *N* slave lasers, the frequency of the first beam is shifted to the predetermined frequency $f_k^S$, corresponding to said laser *k*, thereby generating the stabilized light.

The present example is now further explained with reference to **Fig. 5**. As shown in Fig. 5, the *N* slave lasers 500 may be simultaneously stabilized to emit light 510 at the respective resonant frequencies $f_i^R$. In other words, the target frequencies $f_i^T$ may be equal to the resonant frequencies $f_i^R$, and each of the *N* slave lasers 500, may be stabilized at a corresponding one of the *N* resonant frequencies $f_i^R = f_i^T$. The laser will thus emit, except for deviations from ideal behavior

$$\Delta f_i^{ET} = f_i^E - f_i^R = \Delta f_i^{ER}$$

, light at frequencies $f_i^E = f_i^R$. It is noted that these deviations are not made explicit in Fig. 5, so as to illustrate the locked state of the slave lasers 500 in which said deviations are possibly very small (residual) deviations. The stabilization of the *N* slave lasers 500 at the target frequencies $f_i^T$ may be based on electronic feedback 555 provided by the stabilization system 550.

For each of the *N* slave lasers 500, the light 510 emitted by said slave laser 500 may be split into system light 521 and feedback light 522 corresponding to said laser. As shown in Fig. 5, the splitting may be performed using one or more beamsplitters 520.

The feedback light 522 is sent to the stabilization system 550 for generating the error signals and/or the electronic feedback 555. In particular, the feedback light may be used in the stabilization system to generate the input light, which is to be fed to the optical resonator. For instance, the feedback light 522 or part thereof may be the input light. As explained above, before feeding it to the optical resonator, the feedback light 522 may be phase modulated, or only a part of the feedback light 522 may be fed to the optical resonator.

Furthermore, using one or more frequency shifting devices 560, the frequencies $f_i^E$ of the system light 521 are shifted to the predetermined frequencies $f_i^S$, thereby generating the stabilized light 570 at frequencies $f_i^S$, except for the deviations from ideal behavior $\Delta f_i^{ER}$. More specifically, the frequencies of the system light 521 are shifted by the respective differences $\Delta f_i^{SR} = f_i^S - f_i^R$. These frequency shifts $\Delta f_i^{SR}$, to be performed by the shifting devices 560, may be determined when determining the stabilization length of the optical resonator and/or may be kept fixed during the stabilization of the slave laser by means of the feedback-loop. The frequency shifting device(s) 560 may, for instance, be an acousto-optic modulator that performs an electronic frequency upshift or downshift.

The stabilized light 570, which is, except for the deviations from ideal behavior $\Delta f_i^{ER}$, at the correct frequencies $f_i^S$ required by the application system 580, may then be provided (e.g., output) to the application system 580. It is noted that, when the slave laser are locked to the cavity, the deviations from ideal behavior $\Delta f_i^{ET}$ (i.e., in the present example the $\Delta f_i^{ER}$, and, in the example with respect to Fig. 6, the $\Delta f_i^{ES}$) are rather small (e.g., in comparison with the shifts $\Delta f_i^{SR}$ performed with the frequency shifters 560) and immediately counteracted based on the error signals. In other words, the application system 580 is provided with the light of the predetermined frequencies $f_i^S$ with a very high accuracy as well as with very high stability.

It is further noted that the stabilization system 550 shown in Fig. 5 does not comprise the beam splitter(s) 520 and frequency shifters 560. However, the present invention is not limited thereto, and the stabilization system may comprise the beamsplitters 520 and/or the phase shifters 560.

Correspondingly, a stabilization system is provided that comprises one or more beam splitters for splitting light emitted by the *N* lasers into a first beam and a second beam, wherein the second beam is the input light to be fed to the apparatus in order to the generate *N* error signals. The stabilization system may further comprise a control circuitry that is configured to stabilize simultaneously the *N* lasers to emit light at the respective resonant frequencies $f_i^R$. Moreover, the stabilization system may comprises one or more frequency shifters for shifting frequencies of the first beam to the respective predetermined frequencies $f_i^S$.

The optical arrangement shown in Fig. 5 is a particularly economical configuration because acousto-optic modulators (AOMs) can also be used to modulate the light power. AOMs are typically desired between the slave laser and the application system anyway as an ultrafast shutter and/or power regulating device.

As another example, the $N$ slave lasers may be simultaneously stabilized to emit light at the respective predetermined frequencies $f_i^S$. For each laser $k$ of the $N$ slave lasers, the light emitted by the slave laser $k$ may be split into the stabilized light and the feedback light (that correspond to said laser $k$). Furthermore, for each laser $k$ of the $N$ slave lasers, the frequency of the feedback light is shifted to the resonant frequency $f_k^R$, corresponding to said laser $k$, and the feedback light with the shifted frequency is fed to the optical resonator.

The present example is now further explained with reference to **Fig. 6**. As shown in Fig. 6, the $N$ slave lasers 500 may be simultaneously stabilized to emit light 610 at the respective predetermined frequencies $f_i^S$. In other words, the target frequencies $f_i^T$ may be equal to the predetermined frequencies $f_i^S$, and each of the N slave lasers 500, may be stabilized at a corresponding one of the $N$ predetermined frequencies $f_i^S = f_i^T$. The laser will thus emit light at frequencies $f_i^E = f_i^S$, except for possibly small deviations from ideal behavior $\Delta f_i^{ET} = f_i^E - f_i^S = \Delta f_i^{ES}$. It is noted that these deviations are not made explicit in Fig. 6, so as to illustrate the locked state of the slave lasers 500 in which said deviations are possibly very small (residual) deviations. The stabilization of the $N$ slave lasers 500 may be based on electronic feedback 555 provided by the stabilization system 550.

For each of the $N$ slave lasers 500, the light 610 emitted by said slave laser 500 may be split into system light 521 and feedback 622a corresponding to said laser. As shown in Fig. 6, the splitting may be performed using one or more beamsplitters 520.

In the present example, one or more frequency shifting devices 560 (as the devices 560 explained with reference to Fig .5), is used to shift the frequencies $f_i^S$ of the feedback light 622a to the resonant frequencies $f_i^R$. Thereby, the (shifted) feedback light 622b at frequencies $f_i^R$, except for the deviations from ideal behavior $\Delta f_i^{ES}$, is generated. More specifically, the frequencies of the feedback light 622a are shifted by the respective frequency differences $\Delta f_i^{RS} = f_i^R - f_i^S$. The frequency shifts $\Delta f_i^{RS}$, to be performed by the shifting devices 560, may be determined when determining the stabilization length of the optical resonator and/or may be kept fixed during the stabilization of the slave laser by means of the feedback-loop.

The feedback light 622b is then provided to the stabilization system 550. Based thereon and as already described with reference to the feedback signal 522 in Fig. 5, the stabilization system 550 generates the error signals and/or electronic feedback.

In the present example, the system light is already at the correct frequencies $f_i^S$, except for the residual deviations $\Delta f_i^{ES}$. In other words, the system light 521 may be provided (e.g., output) to the system 580 as the stabilized light 570 with frequencies $f_i^S$ with a very high accuracy as well as with very high stability.

It is further noted that the stabilization system 550 shown in Fig. 6 does not comprise the beam splitter(s) 520 and frequency shifters 560. However, the present invention is not limited thereto, and the stabilization system may comprise the beamsplitters 520 and/or the phase shifters 560.

Correspondingly, a stabilization system is provided that comprises one or more beam splitters for splitting light emitted by the $N$ lasers into a first beam and a second beam, wherein the second beam is the input light to be fed to the apparatus in order to the generate $N$ error signals. Furthermore, the stabilization system may comprise a control circuitry that is configured to stabilize simultaneously the $N$ lasers to emit light at the respective predetermined frequencies $f_i^S$. Moreover, the stabilization system may comprise one or more frequency shifters for shifting frequencies of the second beam to the respective resonant frequencies $f_i^R$.

It is noted that, using the configuration shown in Fig. 6, there may be no need to shutter the light on/off or modulate its intensity, which may allow to provide more power to the experiment.

It is noted that the stabilization system shown in Fig. 5 and Fig. 6 are combinable. For instance, one or more target frequencies may be different than the corresponding resonant frequencies as well as different than corresponding predetermined frequencies, $f_i^S \neq f_i^T \neq f_i^R$, for some or all $i$. Alternatively or in addition, some target frequencies may correspond to resonant frequencies $f_i^T = f_i^R$, whereas for other target frequencies may correspond to predetermined frequencies $f_j^T = f_j^S$ (for one or more $i \neq j$). In these cases, there may be one or more first frequency shifter 560 between the beam splitter 520 and the stabilization system 550 and one or more second frequency shifter 560 between the beam splitter 520 and the application system 580. The first frequency shifters 560 then shift the feedback light to the resonant frequencies, as explained with reference to Fig. 5, and the second frequency shifters shift the system light to the predetermined frequencies, as explained with reference to Fig. 6.

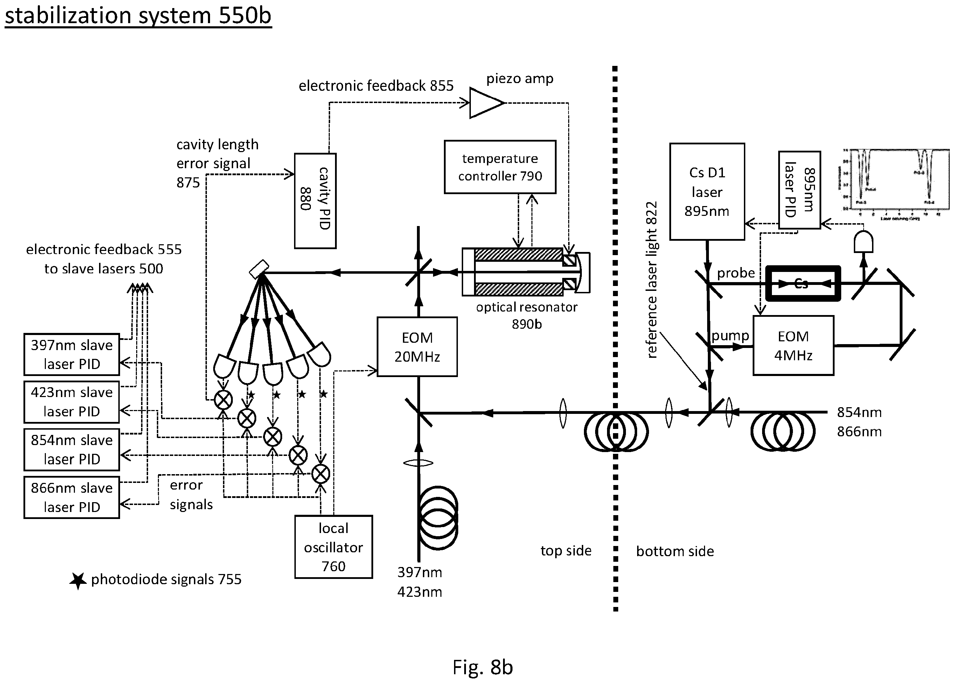

An exemplary method for generating $N$ error signals 775a-775d based on the output light 720 of the optical resonator is now described with reference to **Fig. 7,** which shows an exemplary configuration of a stabilization system 550, denoted as stabilization system 550a. It is noted that in Fig. 7 (as well as in Fig. 8a and 8b) solid lines are optical paths, and dashes are signal paths (e.g., electrical signals). Furthermore, in Fig. 7, $N$ is assumed to be 4, but may, in general, be any integer greater than 1. Moreover, the stabilization systems 550a and 550b may be used with either of the optical arrangements shown in Fig. 5 and 6.

In the stabilization system 550a, there is a temperature controller 790 that controls the temperature of the spacer 892 so that the cavity length remains at the stabilization length. In other words, the temperature controller 790 adjusts the temperature of the spacer 892 and, thereby, adjusts the length of the spacer 892 and the length of the optical resonator 890a as well as adjusts the distance between the mirrors 891, 894 at the stabilization length. It is noted that, this adjusting of the temperature controller 790 may be based on feedback (e.g., temperature measurements). The temperature controller 790 may thus also stabilize the temperature of the spacer and thereby stabilizes the distance between the mirrors. Here, the term adjusting refers to the initial length adjustment of the cavity to the stabilization length that is usually substantially larger than the length adjustments performed for the stabilizing.

Thus, both the term *"adjusting"* as well as the term *"stabilizing"* are her used to refer to a length adjustment of some element between the mirrors so that the distance between the mirrors is at the stabilization length. However, the adjusting is performed (and usually also finished) before the system is provided with the stabilized light, whereas the stabilizing is usually performed during the provision of the system with the stabilized light. Furthermore, for the adjusting it is more important that the distance between the mirrors can be varied over a large range, whereas for the stabilizing it is more important that the distance between the mirrors can be adjusted rather fast. Therefore, as further explained below with reference to Fig. 8a, the stabilizing may also (or mainly) be performed by some other element than the spacer. Nevertheless, the length/temperature of the spacer or, in general, the length of the element used for adjusting the distance to the stabilization length is kept fixed during the stabilizing of the distance, which contributes to stabilizing of the distance as well.

The stabilization system 550 then locks the lasers to the *"stabilized"* stabilization length using the laser frequency stabilization method described below. It is noted that this laser frequency stabilization method is essentially the Pound-Drever-Hall (PDH) locking method, which is a locking method for a single laser, applied to multiple ($N > 1$) lasers. The PDH method is in detail described, for instance, in Eric D. Black "An introduction to Pound-Drever-Hall laser frequency stabilization", Am. J. Phys., Vol. 69, No. 1, January 2001, DOI: 10.1119/1.1286663.

As already explained above, once the lasers are locked, the feedback light will be at frequencies $f_i^E = f_i^T$, except for possibly small residual deviations from ideal behavior $\Delta f_i^{ET} = f_i^E - f_i^T$. In Figs. 7 and 8, as well as in the following discussion regarding these figures, these deviations are made explicit by writing the frequencies of the feedback light as $f_i^R + \Delta f_i^{ET}$, unlike in Figs. 5 and 6. However, the PDH technique described below also applies to, e.g., the initial locking of the lasers, where the deviations $\Delta f_i^{ET}$ may be larger.

A phase modulator 700 modulates the phase of the feedback light, e.g., of the feedback light 522 or 622b. More specifically, the phases of the feedback light $j(2\pi(f_i^R + \Delta f_i^{ET})t$ are modulated with the frequency $\Omega$ of the local oscillator 760 according to

$$e^{j(2\pi(f_i^R+\Delta f_i^{ET})t+\beta\sin(\Omega t))},$$

where $j$ is the imaginary unit, and $\beta$ is a small real number (e.g., $\beta \ll 2$). The phase modulator may, for instance, be an electro-optic modulator (EOM) with a modulation frequency of $\Omega$ = 20MHz. However, the present invention is not limit thereto as, in general, another optical element, e.g., a mechanically oscillating (rotating) glass plate (phase plate) may be used for modulating the phase.

The phase-modulation yields the input light 710, indicated by the white-filled arrows in Fig. 7, which comprises the carrier frequencies $f_i^R + \Delta f_i^{ET}$ and, for each carrier frequency, two respective side bands $f_i^R + \Delta f_i^{ET} \pm \Omega$. Advantageously, the modulation frequency is selected much smaller than the resonant frequencies $\Omega \ll f_i^R$, which results in the sidebands being close to the carrier frequency.

The input light 710 is fed to the optical resonator 890a. A part of the input light 710 may also be directed to a test point 715, where the phase-modulation of the input light can be monitored and/or analyzed. The optical resonator 890a is formed by two mirrors 891 and 894. As indicated, one may be curved (concave), for focusing the laser beam, and one mirror may be flat/planar (in Fig. 7, mirror 894 and 891, respectively). The optical resonator further includes a spacer 892, located between the mirrors 891 and 894, and thus the distance between the two mirrors 891 and 894 depends on the length of the spacer 892.

The optical resonator 890a will then output (or generate) reflected output light 720, indicated by the black-filled arrows in Fig. 7, which is directed to a diffraction grating 730. The diffraction grating 730 (alternatively, a prism may be used), separates the reflected output light 720 into $N$ beams 740. Each beam corresponds to one of the $N$ laser and comprises one of the carrier frequencies and, if $\Omega \ll f_i^R$, the side bands corresponding to the respective carrier frequency.

The intensities of the $N$ beams 740 are measured separately using $N$ respective photodetectors 750 (or photodiodes 750, e.g., shield-shaped grey photodiodes), which yields $N$ photodiode (electronic) signals 755, which indicate the intensity of the $N$ respective beams 740. The photodetector signals 755 are then mixed down by the mixers 770 using the local oscillator 760, also used for the phase-modulation. More specifically, the mixers 770 multiply each of the $N$ photodiode signals 755 with the $\sin(\Omega t)$ from the local oscillator possibly phase-delayed by some constant phase with respect to the $\sin(\Omega t)$ used for the phase-modulation. After the mixing, low-pass filters may be used to remove oscillating terms from the mixed signals (not shown in Fig. 7). In other words, the mixers are used to demodulate the electrical signals from the photodetectors and thus function as phase detectors.

The $N$ signals 775a to 775d resulting from the mixing and, possibly, filtering, are the electronic error signals. Each of the $N$ error signals 775a to 775d gives a measure of how far (and in which direction) the corresponding frequency of the feedback light (or the corresponding carrier frequency of the input) is off resonance with the cavity. In other words, each of the $N$ error signals indicates the $\Delta f_i^{ET}$ corresponding to said error signal and, thus, indicates how far the corresponding laser differs from its target frequency and may be used as feedback for active stabilization of said laser. In particular, for small deviations $\Delta f_i^{ET}$, the PDH error signals may be proportional to said small deviations $\Delta f_i^{ET}$.

The feedback is typically carried out using a Proportional-Integral-Derivative PID controller (slave laser PID 780a to 780d), which uses one of the PDH error signals and generates a corresponding electronic feedback 555a to 555d. In a control loop, the electronic feedback can be fed back to the corresponding laser to keep the emit frequency of said laser at the target frequency of said laser. In other words, the lasers are stabilized in a feedback loop at the target frequencies. The stability of the resonator cavity is thereby transferred to the slave laser, i.e., they are *"locked"* to the cavity. It is noted that the stabilization system 550a may not include the slave laser PIDs and output, instead of the electronic feedback 555a to 555d, the N error signals 775a to 775d. In this case, the slave laser PIDs may be part of (e.g., attached to or integrated into) the $N$ slave lasers 500.

As explained above, the distance between the mirrors may be kept at the stabilization length by fixing the temperature of the spacer. However, the present invention is not limited thereto. For instance, the distance between the mirrors may also be fixed at the stabilization length by using a reference laser.

In particular, if the cavity length is not stable enough to provide the desired long-term slave laser stability, the cavity length can be stabilized to a reference laser. The stabilization length is then a length at which the cavity is resonant with the reference laser while being nearly-resonant with all slave lasers. Here, the term *"reference laser"* refers to a laser that emits light at a specific reference frequency $f_{ref}$ with a particularly high stability. For instance, as shown in Fig. 8b, a diode laser locked to a Caesium vapor cell ((e.g., using the Caesium 895 nm D1 line of Caesium) may be used as reference laser. Alternatively, a 729nm *"qubit laser"*, which drives the optical qubit transitions in Ca$^+$ ions, may be used as the reference laser. The nature of this qubit transition is such that stabilization to a passive ultra-low expansion glass (ULE) glass reference cavity with drifts of around 1 Hz/s is necessary.

Accordingly, the distance between the mirrors may be adjusted to a stabilization length for which the optical resonator has a resonant frequency that corresponds to the frequency of light of a reference laser. The distance between the two mirrors may then be stabilized to the stabilization length by locking the distance between the mirrors to the reference laser.

Correspondingly, the stabilization system may comprise a control circuitry that is configured to adjust the distance between the two mirrors to the stabilization length in accordance with a frequency of a reference laser. The stabilization system may comprise a control circuitry that is configured to stabilize the distance between the two mirrors to the stabilization length by locking the distance between the mirrors to the reference laser.

In other words, when adjusting the optical path length to a stabilization length, the stabilization length may be determined in accordance with the (emit) frequency of a reference laser. In particular, the stabilization length may be determined such that one of the resonant frequencies of the optical resonator is the frequency of the reference laser.

After the mirror distance has been adjusted to a stabilization length, i.e., after the stabilization length has been determined, the mirror distance may be stabilized (in other words, kept fixed at) at said stabilization length by locking the cavity to the reference laser in a feedback loop. The stabilization of the mirror distance may be performed simultaneously with the stabilization of the slave laser.

In general, the stabilization of the resonator length may function analogous to the stabilization of the slave lasers. This is now further explained with reference to **Fig. 8a,** which shows an exemplary configuration of a stabilization system 550 that uses a reference laser for stabilizing the resonator length, denoted as stabilization system 550b. The stabilization of the slave lasers is performed as explained with reference to Fig. 7 and therefore is not repeated.

As shown in Fig. 8a, the light fed to the phase modulator 700 now includes, in addition to the feedback light from the slave lasers (e.g., the feedback light 522 or 622b) at the frequencies

$$f_i^R + \Delta f_i^{ET} \ (i = 1, 2, ..., N)$$

, the light 822 from the reference laser at the frequency $f_{ref} = f_{N+1}^R$ $f_{ref}$ which is also a resonant frequency of the resonator at the stabilization length. It is noted that, in general, the reference laser may be part of the stabilization system as illustrated in Fig. 8b, or may not be part of a separate stabilization system.

Up to and including the generation of the error signal 875 corresponding to the reference laser, the light and electronic signal corresponding to the reference laser is treated as the slave laser light in Fig. 5. The difference between locking of cavity to reference laser and locking of a slave laser to the cavity is that the error signal is used to re-adjust the length of the cavity instead of re-adjusting the frequency of the laser. Thus, in general, the locking of the mirror distance to the reference laser may include feeding the light of the reference laser to the optical resonator, and thereby to generate a reference error signal.

More specifically, as explained above, an error signal gives a measure of how well the frequency of the feedback light corresponding to the error signal satisfies the resonance condition. Since the slave lasers are significantly less stable than the cavity length, the error signal indicates (mostly) a frequency change of the corresponding slave laser. However, in case of the reference laser, the reference laser is far more stable than the length of the optical resonator. Thus, the reference error signal 875 corresponding to the reference laser indicates a change of the length of the optical resonator 890b. In Fig. 8a, the reference error signal is therefore labelled cavity length error signal 875.

Accordingly, based on the cavity length error signal 875, the cavity PID 880 can generate electronic feedback 855 for a length-adjustable element 893 (e.g., a piezo element 893) of the optical resonator 890b. More specifically, the optical resonator 890b differs from the optical resonator 890a in that a length-adjustable element 893 is located between one of the mirrors and the spacer 892. Thus, in case of the optical resonator 890b, the distance between the two mirrors depends on both the length of the spacer 892 and the length of the length adjustable-element 893.

Based on the electronic feedback 855, the length of the length-adjustable element 893 (for instance, the length of a fast piezo element 893) can be continuously (re-)adjusted in a control loop so that the resonator length stays at the stabilization length, which is here also referred to as *"stabilized"*. Thus, in general, the locking of the mirror distance to the reference laser may include repeatedly adjusting, in a feedback loop based on the reference error signal 875, the length of the piezo element 893. Thereby, the stability of the reference laser is transferred to the length of the resonator cavity, i.e., they cavity is *"locked"* to the reference laser. Since the slave lasers are locked to the cavity, the stability of the reference laser is also transferred to the slave laser.

In general, the length-adjustable element may be the spacer. In other words, the length of the same element may be adjusted when adjusting the cavity length to the stabilization length and when stabilizing the cavity length at the stabilization length. However, since the requirements of both steps are quite different, it may be advantageous to adjust the length of different elements in the adjusting and the stabilizing steps (loop). More specifically, the adjustment of the resonator length to the stabilization lengths requires rather large length-adjustments, whereas the stabilizing at the stabilization length requires rather fast and precise, but usually small, lengths adjustments. Therefore, it may advantageous when the length-adjustable element and the spacer are different components of the optical cavity (as in Fig. 7, 8a and 8b).

For instance, the optical cavity may include a piezo element between one of the two mirrors and the spacer, and the distance between the two mirrors is adjustable by means of the piezo element. In other words, the distance between the two mirrors may depends on the length of a piezo element located between the two mirrors. Advantageously the piezo element is a small and/or fast ring piezo element. For instance a small and fast ring piezo actuator) with a maximum displacement of 2μm may be placed between the spacer and one of the mirrors. This piezo element may then be used to lock and/or stabilize the cavity length to the reference laser. Alternatively, the length-adjustable element may be implemented by means of a transducer and an actuator.

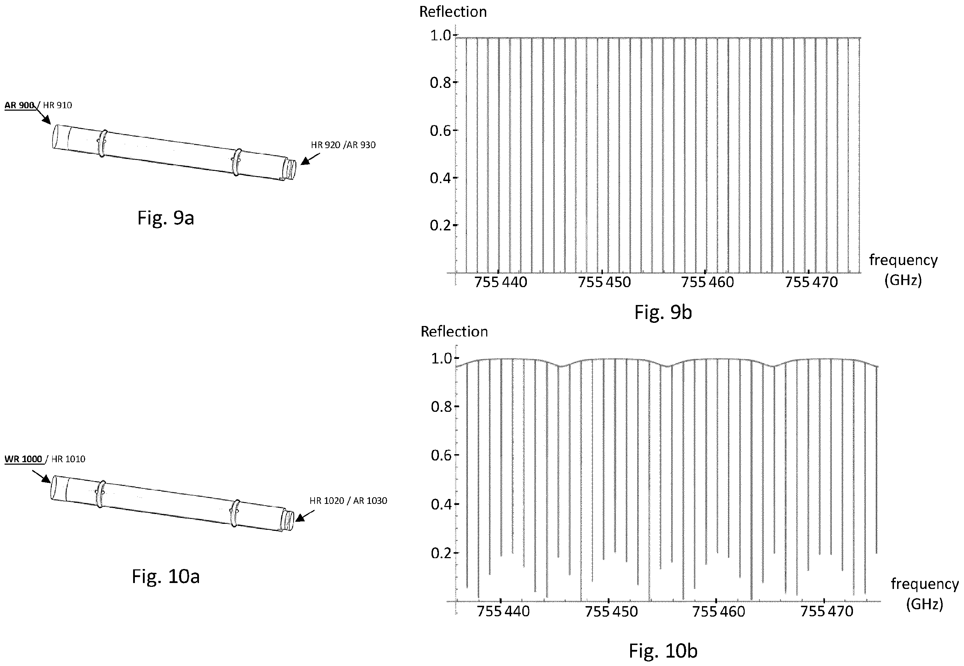

**Fig. 9a** is an illustration of an optical resonator. One of the mirrors (in Fig. 9a, the left mirror) of the resonator has an anti-reflecting (AR) outer surface 900 and a highly-reflecting (HR) inner surface 910. The other mirror (in Fig. 9a, the right mirror) has also an AR outer surface 940 and a HR inner surface 930. For instance, each of the mirrors may be HR-coated on the inner surface and AR-coated on the outer surface. In other words, the mirrors of the optical resonator may in general be HR on the inner surface (e.g., on the surface directed toward the other mirror of the optical resonator) and, in general, AR on the outer surface (e.g., on the surface through which light can be fed into the optical resonator).

Light incident on the cavity of Fig. 9a from the left or right is reflected and may exhibit the intensity spectrum shown in **Fig. 9b.** Each of the lines parallel to the y-axis correspond to a resonant frequency of the optical resonator, whereas the line parallel to the x-axis (i.e., the line intersecting the y-axis near the 1.0 mark) corresponds to the non-resonant frequencies. As can been seen, light of all resonant frequencies is reflected with practically the same intensity of essentially zero, and light with a frequency just slightly away from a resonant frequency is almost completely reflected. If the incident light is phase-modulated then the cavity converts this phase modulation to an intensity modulation near the cavity resonances. As described above, this is an optical error signal which can be detected by a photodiode. The laser frequency can be locked to the bottom of the reflection dips shown in the spectrum. This whole process is the conventional PDH method, as described above.

However, as illustrated in **Fig. 10a,** one of the AR surfaces may be converted to a weakly-reflecting (WR) surfaces (e.g. by WR-coating it). In other words, the left mirror of the optical resonator has a WR outer surface 1000 and a HR inner surface 1010, whereas the right mirror has an AR outer surface 1040 and a HR inner surface 1030. In general, one of the mirrors of the optical resonator may have a WR outer surface and a HR inner surface. The other mirror(s) have still have an AR outer surface and HR inner surface. Advantageously, the mirror with the WR surface is that mirror (or, at least, one of the mirrors) through which the input light is fed into the optical resonator.

This modification creates a coupled-cavity system of three interfering cavities, henceforth referred to as *"three-mirror etalon".* More specifically, a first cavity is formed between the HR inner surfaces (i.e., between the surfaces 1010 and 1020 in Fig. 10b); a second cavity is formed between the AR in the WR surface of the left mirror (i.e., between the surfaces 1000 and 1010), and a third cavity is formed between the WR of the left mirror and the HR surface of the right mirror (i.e., between the surfaces 1000 and 1020).

This *"etalon"* effect causes successive longitudinal modes to have varying coupling efficiencies, which creates a chaotic reflection spectrum. In general, etalons are flat pieces of glass used as interferometers. For high stability, they must be temperature controlled. In optical resonators, these etalon effects usually arise as an unwanted result of back-reflections and are typically avoided as they are sensitive to the temperature of mechanical elements and air pressure of the region between the back-reflecting optic and the cavity. Since the etalon is integrated directly into the reference cavity, it benefits from the temperature control and mechanical stability of the optical cavity. This spectrum may be used as local fingerprint to identify the frequency of each resonant mode without an expensive wavemeter. In other words, the three-mirror etalon may be used simultaneously as a frequency reference and as a wavemeter. More specifically, for a normal cavity (with mirrors as in Fig. 9a), all of the resonances look identical (as in Fig. 10a). Therefore, in order to make sure that the slave lasers are locked to the right resonances of the optical resonator, e.g. a commercially available wavemeter may have to be used to check the frequency of the slave lasers after they have been locked to the optical resonator.

However, when the three-mirror etalon (or, in general, an etalon with more than three mirrors) is used resonances, in particular neighboring) look different, which is illustrated in Fig. 10b. **Fig. 10b** shows an exemplary spectrum of light reflected by the left mirror of the optical resonator of Fig. 10a based on a simulation of the reflected light power. In Fig. 10b, each of the lines parallel to the y-axis correspond to a resonant frequency of the optical resonator, whereas the line connecting the lines parallel to the y-axis (i.e., the curvy line intersecting the y-axis near the 1.0 mark) corresponds to the non-resonant frequencies. The change from the conventional two high-reflecting-surfaces-configuration to a configuration with the third weakly reflecting surface creates the chaotic local wavemeter effect. It is further noted that strictly speaking, the graph of Fig. 10b is just one continuous line that indicates the reflectivity of the cavity as a function of the input light's frequency. The resonance dips are so sharp that they look like vertical lines in the figure. More specifically, at the resonances, the reflectivity curve actually goes down very fast (very shortly before the respective resonance) and goes back up again very fast (very shortly before the respective resonance). The same holds for Fig. 9b.As can be seen, light with a frequency just slightly away from a resonant frequency is still almost completely reflected, although, on account of the etalon effect, with slightly different intensities close to one. Furthermore, light of all resonant frequencies is still reflected with a rather low intensity. However, as well due to the etalon effect, light of resonant frequencies is reflected with substantially different small intensities, which may allow to distinguish, at least locally, different resonant frequencies. In other words, this may allow to identify a resonant frequency from the next or previous (e.g., from the next or previous one, two or three) resonant frequencies in frequency domain. The error signal functions exactly as in the previous example.

Thus, in general, the optical resonator may be formed by two (or more) mirrors. One of these mirror may have a highly-reflecting inner surface and a weakly-reflecting outer surface, whereas the other mirror may have a highly-reflecting inner surface and an anti-reflecting outer surface. Advantageously, said optical resonator is formed by the highly-reflecting inner surface of the first mirror and the highly-reflecting inner surface of the second mirror.

In other words, a resonator may be formed by a pair of mirrors attached on either end of the spacer. Each is highly reflective on the inner surface and, thus, the mirrors form a resonant cavity. One mirror may be flat and has its outer surface weakly reflecting at the slave and reference frequencies which modulates the cavity spectrum so that the cavity is usable as a wavemeter. In particular, based on a characteristic of the cavity spectrum, it can be determined whether a slaver is locked to the correct resonant frequency of the optical resonator.

Correspondingly, the output light, output by the optical resonator when fed with input light, may be output using, two (or more) mirrors: a first mirror that has a highly-reflecting inner surface and a weakly-reflecting outer surface, and a second mirror that has a highly-reflecting inner surface and an anti-reflecting outer surface. This may give the output signal an intensity spectrum with local characteristics. The method may then further include, for a laser $j$ of the $N$ lasers, the step of determining, using one of the local characteristics, whether said laser $j$ is stabilized to the resonant frequency $f_j^R$ corresponding said laser $j$.

It is noted that in general, for each laser $j$ of the $N$ lasers, a local characteristic of the intensity spectrum of the output light may be used to determine, using one of the local characteristics, whether the laser $j$ is stabilized (e.g., locked) to the resonant frequency $f_j^R$ that corresponds to said laser.

For example, the HR surface may have a reflection coefficient $|r_{HR}| > 99\%$, where $r_{HR}$ is the ratio of the complex amplitude of the electric field of a wave reflected on the HR surface to the complex amplitude of the corresponding incident wave. The WR surface may have a reflection coefficient $|r_{WR}| > 4\%$ and/or a reflection coefficient $|r_{WR}| < 25\%$, whereas the AR surface may have a reflection coefficient $|r_{AR}| < 1\%$. Producing the WR surface is similar to producing any other mirror. The above described Etalon effect can also be implemented by using an uncoated surface as a WR surface or by using, a wedged optic instead of the WR surface.

It is further noted that the terms HR, AR, and WR refer in general to the reflection properties of the mirrors at the slave and reference laser frequencies.

It is noted that it may be easier to observe the chaotic three-mirror effect directly in the intensity of the reflected or transmitted light of each laser, rather than to observe it in the error signals 775a-d. For instance, based on the photodiode signals 755, in addition to the error signals 775a-d another set of $N$ signals, henceforth referred to as "wavemeter signals" may be generated. The error signals 775a-d are used to stabilize the slave lasers, as explained above; and the wavemeter signals are used to determine whether the slave lasers are locked to the correct modes (i.e., locked to the resonant frequencies $f_i^R$, respectively).

These wavemeter signals may be observed by looking at the photodiode signals 755 (at the positions, marked by black stars in the Fig. 7, 8a and 8b) before the mixers 770 and by filtering the intensity modulation (20MHz), caused by the phase modulation of the phase modulator 700, out of the photodiode signals 755. In this way, the reflected light signal that you would see without phase modulation and as illustrated in Figs. 9b and 10b can be obtained. It is noted that this filtering as well as the generation of the wavemeter signals is not shown in the Fig. 7, 8a and 8b. In general, a "local characteristic", used to decide whether a slave laser $j$ is locked to the corresponding resonant frequency $f_j^R$, rather than another resonant frequency, may be the size of the reflection. More specifically, a local characteristic may be the percentage of input light that is reflected (corresponding to the size of a peak in Fig. 10b) or transmitted by the optical resonator: For a cavity (e.g., with mirrors as in Fig. 10a) using an Etalon, different, in particular neighboring, resonances look different, as illustrated in Fig. 10b. That is, the percentage of the reflected and transmitted light is different (the peaks in Fig 10b have different sizes). It is further noted that the local characteristic may be a local characteristic of the reflected and/or the transmitted output light.

More specifically, the error signal is fed to a laser as feedback to force the laser to the center of the capture range. Here, the center of the capture range corresponds to a resonant frequency of the optical resonator, and the capture range corresponds to a range in frequency for which the feedback can stabilize the input light at the center frequency. Thus, to initiate the lock, the laser frequency has to start within the capture range of resonance.

Once the feedback loop is closed, a laser does usually not go outside the capture range and, thus, keeps being locked to the same resonant frequency. However, if there is some large disturbance which destroys the lock (e.g., input light is blocked, or the laser frequency suddenly jumps due to a mechanical disturbance or mode hop and cannot be corrected fast enough etc.), it is possible that the laser is accidentally relocked to another cavity resonance than the cavity resonance it was locked before the disturbance.

When making sure that the slave laser $j$ is initially locked to the correct resonant frequency $f_j^R$ e.g., by using a wavemeter, the size of the reflection corresponding to said correct resonance $f_j^R$ may be determined. In other words, the local characteristic of the spectrum at each correct resonant frequency $f_i^R$ may be determined, after adjusting the distance between the mirrors to the stabilization length and checking, e.g., with a wavemeter, whether the distance between the mirrors is correctly adjusted to the stabilization length. Thereafter, during the stabilization of the laser using the feedback loop, it can be determined whether the lasers are still locked to the correct resonant frequencies by comparing the size of the current reflection peaks with the predetermined sizes of the respective corresponding correct resonances.

**Claims**

1. A method for stabilizing (S260) simultaneously, using an optical resonator (100; 890a; 890b) formed by two mirrors (120, 140; 891, 894), N lasers in order to output stabilized light of *N* respective mutually different predetermined frequencies $f_i^S$, *i* = 1, ... , *N*, the method including the steps of:

   adjusting (S200) a distance (130) between the two mirrors (120, 140; 891, 894) to a stabilization length, **characterized by** that at the stabilization length:

   - there is, for each predetermined frequency $f_i^S$, a resonant frequency $f_i^R$ of the optical resonator (100; 890a; 890b) for which a difference between the predetermined frequency $f_i^S$ and the resonant frequency $f_i^R$ is smaller than a predetermined target value, and
   - the optical resonator (100; 890a; 890b) has further a resonant frequency that corresponds to a frequency of light (822) of a reference laser, wherein the reference laser has a higher frequency stability than the *N* lasers;

   feeding (S240) light (710) from each of the *N* lasers (500) to the optical resonator (100; 890a; 890b), thereby generating N error signals (775a-775d);
   stabilizing the distance between the two mirrors (120, 140; 891, 894) to the stabilization length by locking the distance to the reference laser; and
   stabilizing (S260) simultaneously the *N* lasers (500) based on the *N* error signals (775a-775d).

2. The method according to claim 1, wherein

   the distance (130) between the two mirrors (120, 140; 891, 894) depends on a length of a spacer (150; 892), located between the two mirrors (120, 140; 891, 894), and
   the adjusting (S200) of the distance (130) between the two mirrors (120, 140; 891, 894) includes a step of adjusting (S200) the length of the spacer (150; 892).

3. The method according to claim 2, wherein the adjusting (S200) of the length of the spacer (150; 892) includes a step of

   adjusting (S200) a temperature of the spacer (150; 892), and/or
   adjusting (S200) a length of a piezo element of the spacer (150; 892).

4. The method according to any of claims 1 to 3, wherein
   the N error signals (775a-775d) are generated based on output light (720) output by the optical resonator (100; 890a; 890b), when fed (S240) with the light (710) from the N lasers (500).

5. The method according to claim 4, wherein

   the output light (720) is output using, as the two mirrors (120, 140; 891, 894)

   - a first mirror that has a highly-reflecting inner surface and a weakly-reflecting outer surface, and
   - a second mirror that has a highly-reflecting inner surface and an anti-reflecting outer surface,

   thereby giving the output light (720) an intensity spectrum with local characteristics; and
   the method further includes, for a laser *j* of the *N* lasers, the step of:
   determining, using one of the local characteristics, whether the laser *j* is stabilized (S260) to the corresponding resonant frequency $f_j^R$.

6. The method according to any of claims 1 to 5, wherein,

   the *N* lasers (500) are simultaneously stabilized (S260) to emit light (510) at the respective resonant frequencies $f_i^R$; and
   the method further includes, for each laser *k* of the *N* lasers (500), the steps of:

   - splitting the light (510) emitted by the laser *k* into a first beam (521) and a second beam (522), wherein the second beam (522) is the light from said laser *k* that is fed (S240) to the optical resonator (100; 890a; 890b); and
   - shifting a frequency of the first beam (521) to the corresponding predetermined frequency $f_k^S$, thereby generating the stabilized light (570).

7. The method according to any of claims 1 to 5, wherein,

the N lasers (500) are simultaneously stabilized (S260) to emit light (610) at the respective predetermined frequencies $f_i^S$ ; and

the method further includes, for each laser $k$ of the $N$ lasers (500), the steps of:

- splitting the light (610) emitted by the laser $k$ into the stabilized light (570) and feedback light (622a);
- shifting a frequency of the feedback light (622a) to the corresponding resonant frequency $f_k^R$ ; and
- feeding (S240) the feedback light (622b) with the shifted frequency to the optical resonator (100; 890a; 890b).

**8.** The method according to claim 6 or 7, wherein the shifting of the frequencies is performed using an acousto-optic modulator (560).

**9.** The method according to claim 1, wherein

the distance between the two mirrors (891, 894) depends on a length of a piezo element (893) located between the two mirrors (891, 894); and the locking includes the steps of:

feeding (S240) the light (822) of the reference laser to the optical resonator (890b), thereby generating a reference error signal (875); and
repeatedly, in a feedback loop based on the reference error signal (875), adjusting the length of the piezo element (893).

**10.** A system for outputting stabilized light comprising:

an apparatus configured to simultaneously stabilize (S260) light from $N$ lasers at $N$ respective mutually different predetermined frequencies $f_i^S$ , $i$ = 1, ... , $N$, the apparatus comprising a spacer (150; 892) and two mirrors (120, 140; 891, 894), wherein:

- the two mirrors (120, 140; 891, 894) are arranged to form an optical resonator (890a; 890b) for the plurality of predetermined frequencies,
- a distance between the two mirrors (120, 140; 891, 894) depends on a length of the spacer (150), and
- the length of the spacer (150; 892) is reversibly adjustable within a range of at least 40 $\mu$m; and

a control circuitry configured to:

- adjust (S200) the distance between the two mirrors (120, 140; 891, 894) to a stabilization length, and
- stabilize the distance between the two mirrors (120, 140; 891, 894) to the stabilization length by locking the distance to a reference laser, wherein the reference laser has a higher frequency stability than the $N$ lasers; wherein,

at the stabilization length:

- there is, for each predetermined frequency $f_i^S$ , a resonant frequency $f_i^R$ of the optical resonator (100; 890a; 890b) for which a difference between the predetermined frequency $f_i^S$ and the resonant frequency $f_i^R$ is smaller than a predetermined target value, and
- the optical resonator (100; 890a; 890b) has further a resonant frequency that corresponds to a frequency of light (822) of the reference laser.

**11.** The system according to claim 10, wherein the length of the spacer (150; 892) is adjustable by at least 40 $\mu$m by

increasing or decreasing a temperature of the spacer (150; 892); and/or
adjusting a length of a piezo element of the spacer (150; 892).

**12.** The system according to claim 10 or 11, wherein the spacer (150; 892) is substantially made of material(s) with

- a coefficient of thermal expansion that is larger than 16 ppm/°C,
- a stiffness larger than 10 GPa, and/or
- a damping tangent larger than 0.001.

**13.** The system according to any of claims 10 to 12, wherein
the spacer (150; 892) is made of at least 99,8% magnesium.

**14.** The system according to any of claims 10 to 13, wherein

the apparatus further comprises a piezo element (893) between one of the two mirrors (891, 894) and the spacer (892), wherein

the distance between the two mirrors (891, 894) is adjustable by means of the piezo element (893).

15. The system according to any of the claims 10 to 14, wherein

a first mirror, which is one of the two mirrors (120, 140; 891, 894), has a highly-reflecting inner surface and a weakly-reflecting outer surface; a second mirror, which is that mirror of the two mirrors (120, 140; 891, 894) that is not the first mirror, has a highly-reflecting inner surface and an anti-reflecting outer surface; and the optical resonator (100; 890a; 890b) is formed by the highly-reflecting inner surface of the first mirror and the highly-reflecting inner surface of the second mirror.

16. The system according to any of claims 10 to 15, wherein the control circuitry is configured to adjust the distance between the two mirrors (120, 140; 891, 894) to the stabilization length in accordance with a frequency of a reference laser.

17. The system according to any of claims 10 to 16, wherein

the apparatus comprises an optical input for feeding (S240) input light (710) and thereby to generate N error signals (775a-775d); and wherein the control circuitry is configured to generate, based on the N error signals (775a-775d), electronic feedback (555) for the N lasers (500).

18. The system according to any of claims 10 and 17, further comprising: one or more beam splitters (520) for splitting light (510; 610) emitted by the N lasers (500) into a first beam (521) and a second beam (522; 622a), wherein the second beam (522) is the input light (710) to be fed (S240) to the apparatus in order to the generate N error signals (775a-775d); and wherein either:

- the control circuitry is configured to stabilize (S260) simultaneously the N lasers (500) to emit light (510) at the respective resonant frequencies $f_i^R$, and the system further comprises one or more frequency shifters (560) for shifting frequencies of the first beam (521) to the respective predetermined frequencies $f_i^S$; or

- the control circuitry is configured to stabilize (S260) simultaneously the $N$ lasers (500) to emit light (610) at the respective predetermined frequencies $f_i^S$, and the system further comprises one or more frequency shifters (560) for shifting frequencies of the second beam (622a) to the respective resonant frequencies $f_i^R$.

**Patentansprüche**

1. Verfahren zum gleichzeitigen Stabilisieren (S260) von $N$ Lasern unter Verwendung eines von zwei Spiegeln (120, 140; 891, 894) gebildeten optischen Resonators (100; 890a; 890b) zum Ausgeben von stabilisiertem Licht mit $N$ jeweils verschiedenen vorbestimmten Frequenzen $f_i^S$, $i$ = 1, ... , $N$, wobei das Verfahren die Schritte umfasst zum:

Anpassen (S200) eines Abstands (130) zwischen den zwei Spiegeln (120, 140; 891, 894) auf eine Stabilisierungslänge, **dadurch gekennzeichnet, dass** bei der Stabilisierungslänge

- für jede vorbestimmte Frequenz $f_i^S$ eine Resonanzfrequenz $f_i^R$ des optischen Resonators (100; 890a; 890b) besteht, für die ein Unterschied zwischen der vorbestimmten Frequenz $f_i^S$ und der Resonanzfrequenz $f_i^R$ kleiner ist als ein vorbestimmter Sollwert, und
- der optische Resonator (100, 890a, 890b) ferner eine Resonanzfrequenz aufweist, die einer Lichtfrequenz (822) eines Referenzlasers entspricht, wobei der Referenzlaser eine höhere Frequenzstabilität aufweist als die $N$ Laser;

Zuführen (S240) von Licht (710) von jedem der $N$ Laser (500) zum optischen Resonator (100; 890a; 890b), wodurch $N$ Fehlersignale (775a-775d) erzeugt werden; Stabilisieren des Abstands zwischen den zwei Spiegeln (120, 140; 891, 894) auf die Stabilisierungslänge durch Verriegeln des Abstands zum Referenzlaser; und gleichzeitigen Stabilisieren (S260) der $N$ Laser (500) auf Basis der $N$ Fehlersignale (775a-775d).

2. Verfahren nach Anspruch 1, wobei

der Abstand (130) zwischen den zwei Spiegeln (120, 140; 891, 894) von einer Länge eines zwischen den zwei Spiegeln (120, 140; 891, 894) angeordneten Abstandshalters (150; 892) abhängt, und

das Anpassen (S200) des Abstands (130) zwischen den zwei Spiegeln (120, 140; 891, 894) einen Schritt zum Anpassen (S200) der Länge des Abstandshalters (150; 892) umfasst.

3. Verfahren nach Anspruch 2, wobei

das Anpassen (S200) der Länge des Abstandshalters (150; 892) einen Schritt umfasst zum Anpassen (S200) einer Temperatur des Abstandshalters (150; 892) und/oder Anpassen (S200) einer Länge eines Piezoelements des Abstandshalters (150; 892).

4. Verfahren nach einem der Ansprüche 1 bis 3, wobei die $N$ Fehlersignale (775a-775d) auf Basis von vom optischen Resonator (100; 890a; 890b) ausgegebenen Ausgangslicht (720), wenn mit dem Licht (710) von den $N$ Lasern (500) versorgt (S240), erzeugt werden.

5. Verfahren nach Anspruch 4, wobei

das Ausgangslicht (720) ausgegeben wird unter Verwendung von als die zwei Spiegel (120, 140; 891, 894),

- einem ersten Spiegel, der eine stark reflektierende Innenfläche und eine schwach reflektierende Außenfläche aufweist, und
- einem zweiten Spiegel, der eine stark reflektierende Innenfläche und eine Antireflex-Außenfläche aufweist,

wodurch dem Ausgangslicht (720) ein Stärkespektrum mit lokalen Eigenschaften verliehen wird; und
das Verfahren ferner für einen Laser $j$ der $N$ Laser den Schritt umfasst zum:
Bestimmen unter Verwendung von einer der lokalen Eigenschaften, ob der Laser $j$ auf die entsprechende Resonanzfrequenz $f_j^R$ stabilisiert (S260) ist.

6. Verfahren nach einem der Ansprüche 1 bis 5, wobei,

die N Laser (500) gleichzeitig stabilisiert werden (S260), um Licht (510) mit den jeweiligen Resonanzfrequenzen $f_i^R$ auszugeben; und
das Verfahren ferner für jeden Laser $k$ der $N$ Laser (500) die Schritte umfasst zum:

- Teilen des vom Laser $k$ ausgestrahlten Lichts (510) in einen ersten Strahl (521) und einen zweiten Strahl (522), wobei der zweite Strahl (522) das Licht vom Laser $k$ ist, das dem optischen Resonator (100; 890a; 890b) zugeführt wird; und
- Verschieben einer Frequenz des ersten Strahls (521) zur entsprechenden vorbestimmten Frequenz $f_k^S$, wodurch das stabilisierte Licht (570) erzeugt wird.

7. Verfahren nach einem der Ansprüche 1 bis 5, wobei,

die $N$ Laser (500) gleichzeitig stabilisiert werden (S260), um Licht (610) mit den jeweiligen vorbestimmten Frequenzen $f_i^S$ auszugeben; und
das Verfahren ferner für jeden Laser $k$ der $N$ Laser (500) die Schritte umfasst zum:

- Teilen des vom Laser $k$ ausgestrahlten Lichts (610) in das stabilisierte Licht (570) und Rückkopplungslicht (622a);
- Verschieben einer Frequenz des Rückkopplungslichts (622a) zur entsprechenden Resonanzfrequenz $f_k^R$; und
- Zuführen (S240) des Rückkopplungslichts (622b) mit der verschobenen Frequenz zum optischen Resonator (100; 890a; 890b).

8. Verfahren nach Anspruch 6 oder 7, wobei das Verschieben der Frequenzen unter Verwendung eines akustooptischen Modulators (560) erfolgt.

9. Verfahren nach Anspruch 1, wobei

der Abstand zwischen den zwei Spiegeln (891, 894) von einer Länge eines zwischen den zwei Spiegeln (891, 894) angeordneten Piezoelements (893) abhängt; und
das Verriegeln die Schritte umfasst zum:

Zuführen (S240) des Lichts (22) des Referenzlasers zum optischen Resonator (890b), wodurch ein Referenzfehlersignal (875) erzeugt wird; und
wiederholten Anpassen der Länge des Piezoelements (893) in einem Regelkreis auf Basis des Referenzfehlersignals (875).

10. System zum Ausgeben von stabilisiertem Licht, umfassend:

eine zum gleichzeitigen Stabilisieren (S260) von Licht von N Lasern mit $N$ jeweils verschiedenen vorbestimmten Frequenzen $f_i^S$, $i = 1, ..., N$

ausgebildete Vorrichtung, wobei die Vorrichtung einen Abstandshalter (150; 892) und zwei Spiegel (120, 140; 891, 894) umfasst, wobei die zwei Spiegel (120, 140; 891, 894) zum Bilden eines optischen Resonators (890a; 890b) für die Vielzahl von vorbestimmten Frequenzen angeordnet sind,
ein Abstand zwischen den zwei Spiegeln (120, 140; 891, 894) von einer Länge des Abstandshalters (150) abhängt, und
die Länge des Abstandshalters (150; 892) in einem Bereich von wenigstens 40 $\mu$m umkehrbar anpassbar ist; und
eine Steuerschaltung, ausgebildet zum:

- Anpassen (S200) des Abstands zwischen den zwei Spiegeln (120, 140; 891, 894) auf eine Stabilisierungslänge, und
- Stabilisieren des Abstands zwischen den zwei Spiegel (120, 140; 891, 894) auf die Stabilisierungslänge durch Verriegeln des Abstands zu einem Referenzlaser, wobei der Referenzlaser eine höhere Frequenzstabilität aufweist als die $N$ Laser; wobei,

bei der Stabilisierungslänge:

- für jede vorbestimmte Frequenz $f_i^S$ eine Resonanzfrequenz $f_i^R$ des optischen Resonators (100; 890a; 890b) besteht, bei der ein Unterschied zwischen der vorbestimmten Frequenz $f_i^S$ und der Resonanzfrequenz $f_i^R$ kleiner ist als ein vorbestimmter Sollwert, und
- der optische Resonator (100; 890a; 890b) ferner eine Resonanzfrequenz aufweist, die einer Lichtfrequenz (822) des Referenzlasers entspricht.

11. System nach Anspruch 10, wobei

die Länge des Abstandshalters (150; 892) um wenigstens 40 $\mu$m anpassbar ist
durch Erhöhen oder Verringern einer Temperatur des Abstandshalters (150; 892); und/oder
Anpassen einer Länge eines Piezoelements des Abstandshalters (150; 892).

12. System nach Anspruch 11 oder 12, wobei der Abstandshalter (150; 892) im Wesentlichen aus einem Material / aus Materialien besteht mit

- einem Wärmedehnungskoeffizient, der größer ist als 16 ppm/°C,
- einer Steifigkeit größer als 10 GPa, und/oder

- einem Dämpfungstangens größer als 0,001.

13. System nach einem der Ansprüche 10 bis 12, wobei der Abstandshalter (150; 892) aus wenigstens 99,8 % Magnesium besteht.

14. System nach einem der Ansprüche 10 bis 13, wobei

die Vorrichtung ferner ein Piezoelement (893) zwischen einem der zwei Spiegel (891, 894) und dem Abstandshalter (892) umfasst, wobei der Abstand zwischen den zwei Spiegeln (891, 894) durch das Piezoelement (893) anpassbar ist.

15. System nach einem der Ansprüche 11 bis 15, wobei

ein erster Spiegel, der einer der zwei Spiegel (120, 140; 891, 894) ist, eine stark reflektierende Innenfläche und eine schwach reflektierende Außenfläche aufweist;
ein zweiter Spiegel, welcher der Spiegel der zwei Spiegel (120, 140; 891, 894) ist, der nicht der erste Spiegel ist, eine stark reflektierende Innenfläche und eine Antireflex-Außenfläche aufweist; und
der optische Resonator (100; 890a; 890b) von der stark reflektierenden Innenfläche des ersten Spiegels und der stark reflektierenden Innenfläche des zweiten Spiegels gebildet wird.

16. System nach Anspruch 10 bis 15, wobei die Steuerschaltung zum Anpassen des Abstands zwischen den zwei Spiegeln (120, 140; 891, 894) auf die Stabilisierungslänge in Übereinstimmung mit einer Frequenz eines Referenzlasers ausgebildet ist.

17. System nach einem der Ansprüche 10 bis 16, wobei

die Vorrichtung einen optischen Eingang zum Zuführen (S240) von Eingangslicht (710) und dadurch Erzeugen von $N$ Fehlersignalen (775a-775d) umfasst; und wobei
die Steuerschaltung zum Erzeugen einer elektrischen Rückkopplung (555) für die $N$ Laser (500) auf Basis der $N$ Fehlersignale (775a-775d) ausgebildet ist.

18. System nach Anspruch 17 oder 19, ferner umfassend:
einen oder mehrere Strahlteiler (520) zum Teilen von von den $N$ Lasern ausgestrahltem Licht (510; 610) in einen ersten Strahl (521) und einen zweiten Strahl (522; 622a), wobei der zweite Strahl (522) das Eingangslicht (710) zum Zuführen (S240) zur Vorrichtung zum Erzeugen von $N$ Fehlersignalen (775a-775d) ist; und wobei entweder:

- die Steuerschaltung zum gleichzeitigen Stabilisieren (500) der *N* Laser zum Ausstrahlen von Licht (510) mit den jeweiligen Resonanzfrequenzen $f_i^R$ ausgebildet ist, und das System ferner einen oder mehrere Frequenzschieber (560) zum Verschieben von Frequenzen des ersten Strahls (521) zu den jeweiligen vorbestimmten Frequenzen $f_i^S$ umfasst; oder

- die Steuerschaltung zum gleichzeitigen Stabilisieren (500) der *N* Laser zum Ausstrahlen von Licht (610) mit den jeweiligen vorbestimmten Frequenzen $f_i^S$ ausgebildet ist, und das System ferner einen oder mehrere Frequenzschieber (560) zum Verschieben von Frequenzen des zweiten Strahls (622a) zu den jeweiligen Resonanzfrequenzen $f_i^R$ umfasst.

**Revendications**

1. Procédé pour stabiliser (S260) simultanément, à l'aide d'un résonateur optique (100 ; 890a ; 890b) constitué par deux miroirs (120, 140 ; 891, 894), N lasers afin d'émettre de la lumière stabilisée à N fréquences prédéterminées respectives mutuellement différentes $f_i^S$, i = 1, ... N, le procédé comprenant les étapes suivantes :

réglage (S200) de la distance (130) entre les deux miroirs (120, 140 ; 891, 894) à une longueur de stabilisation,
**caractérisé en ce que**, à la longueur de stabilisation :

- il existe, pour chaque fréquence prédéterminée $f_i^S$ une fréquence de résonance $f_i^R$ du résonateur optique (100 ; 890a ; 890b) à laquelle la différence entre la fréquence prédéterminée $f_i^S$ et la fréquence de résonance $f_i^R$ est inférieure à une valeur cible prédéterminée, et
- le résonateur optique (100 ; 890a ; 890b) a en outre une fréquence de résonance qui correspond à la fréquence lumineuse (822) d'un laser de référence, dans lequel le laser de référence a une stabilité de fréquence supérieure à celle des *N* lasers ;

alimentation (S240) de la lumière (710) de chacun des *N* lasers (500) au résonateur optique (100 ; 890a ; 890b), ce qui génère ainsi *N* signaux d'erreur (775a-775d) ;
stabilisation de la distance entre les deux miroirs (120, 140 ; 891, 894) à la longueur de stabilisation en verrouillant la distance jusqu'au laser de référence ; et
stabilisation (S260) simultanée des *N* lasers (500) sur la base des *N* signaux d'erreur (775a-775d).

2. Procédé selon la revendication 1, dans lequel

la distance (130) entre les deux miroirs (120, 140 ; 891, 894) dépend de la longueur d'une entretoise (150 ; 892) située entre les deux miroirs (120, 140 ; 891, 894), et
le réglage (S200) de la distance (130) entre les deux miroirs (120, 140 ; 891, 894) comprend une étape de réglage (S200) de la longueur de l'entretoise (150 ; 892).

3. Procédé selon la revendication 2, dans lequel le réglage (S200) de la longueur de l'entretoise (150 ; 892) comprend une étape de

réglage (S200) de la température de l'entretoise (150 ; 892), et/ou
réglage (S200) de la longueur d'un élément piézoélectrique de l'entretoise (150 ; 892).

4. Procédé selon l'une quelconque des revendications 1 à 3, dans lequel
les *N* signaux d'erreur (775a-775d) sont générés sur la base de la lumière de sortie (720) émise par le résonateur optique (100 ; 890a ; 890b), lorsqu'il est alimenté (S240) avec la lumière (710) des *N* lasers (500).

5. Procédé selon la revendication 4, dans lequel

la lumière de sortie (720) est émise en utilisant, comme lesdits deux miroirs (120, 140 ; 891, 894) :

- un premier miroir présentant une surface interne hautement réfléchissante et une surface externe faiblement réfléchissante, et
- un deuxième miroir présentant une surface interne hautement réfléchissante et une surface externe anti-réfléchissante,

conférant ainsi à la lumière de sortie (720) un spectre d'intensité avec des caractéristiques locales ; et
le procédé comprend en outre, pour un laser *j* parmi les *N* lasers, l'étape suivante :
détermination, à l'aide de l'une des caractéristiques locales, du fait que le laser *j* est ou non stabilisé (S260) à la fréquence de résonance correspondante $f_i^R$ .

**6.** Procédé selon l'une quelconque des revendications 1 à 5, dans lequel

les *N* lasers (500) sont simultanément stabilisés (S260) pour émettre de la lumière (510) aux fréquences de résonance respectives $f_i^R$ ; et le procédé comprend en outre, pour chaque laser *k* des *N* lasers (500), les étapes suivantes :

- séparation de la lumière (510) émise par le laser *k* en un premier faisceau (521) et un deuxième faisceau (522), dans lequel le deuxième faisceau (522) est la lumière provenant dudit laser *k* qui est alimentée (S240) au résonateur optique (100 ; 890a ; 890b) ; et
- décalage de la fréquence du premier faisceau (521) jusqu'à la fréquence prédéterminée correspondante $f_k^S$ , ce qui génère la lumière stabilisée (570).

**7.** Procédé selon l'une quelconque des revendications 1 à 5, dans lequel

les N lasers (500) sont simultanément stabilisés (S260) pour émettre de la lumière (610) aux fréquences prédéterminées respectives $f_i^S$ ; et le procédé comprend en outre, pour chaque laser k des N lasers (500), les étapes suivantes :

- séparation de la lumière (610) émise par le laser k en lumière stabilisée (570) et lumière de rétroaction (622a) ;
- décalage de la fréquence de la lumière de rétroaction (622a) jusqu'à la fréquence de résonance correspondante $f_k^R$ ; et
- alimentation (S240) du résonateur optique (100 ; 890a ; 890b) avec la lumière de rétroaction (622b) ayant la fréquence décalée.

**8.** Procédé selon la revendication 6 ou 7, dans lequel le décalage des fréquences est effectué à l'aide d'un modulateur acousto-optique (560).

**9.** Procédé selon la revendication 1, dans lequel

la distance entre les deux miroirs (891, 894) dépend de la longueur d'un élément piézoélectrique (893) situé entre les deux miroirs (891, 894) ; et le verrouillage comprend les étapes suivantes :

alimentation (S240) du résonateur optique (890b) avec la lumière (822) du laser de référence, ce qui génère un signal d'erreur de référence (875) ; et de manière répétée, dans une boucle de rétroaction basée sur le signal d'erreur de référence (875), réglage de la longueur de l'élément piézoélectrique (893).

**10.** Système pour émettre une lumière stabilisée, comprenant :

un appareil configuré pour stabiliser (S260) simultanément la lumière de N lasers à N fréquences prédéterminées respectives mutuellement différentes $f_i^S, i =$ 1, ... *N*, l'appareil comprenant une entretoise (150 ; 892) et deux miroirs (120, 140 ; 891, 894), dans lequel :

- les deux miroirs (120, 140 ; 891, 894) sont agencés pour former un résonateur optique (890a ; 890b) pour la pluralité de fréquences prédéterminées,
- la distance entre les deux miroirs (120, 140 ; 891, 894) dépend de la longueur de l'entretoise (150), et
- la longueur de l'entretoise (150 ; 892) est réglable de manière réversible dans une plage d'au moins 40 μm ; et un circuit de contrôle configuré pour :
- régler (S200) la distance entre les deux miroirs (120, 140 ; 891, 894) à une longueur de stabilisation, et
- stabiliser la distance entre les deux miroirs (120, 140 ; 891, 894) à la longueur de stabilisation en verrouillant la distance jusqu'à un laser de référence, dans lequel le laser de référence a une stabilité de fréquence supérieure à celle des N lasers ;

dans lequel, à la longueur de stabilisation :

- il existe, pour chaque fréquence prédéterminée $f_i^S$ , une fréquence de résonance $f_i^R$ du résonateur optique (100 ; 890a ; 890b) à laquelle la différence entre la fréquence prédéterminée $f_i^S$ et la fréquence de résonance $f_i^R$ est inférieure à une valeur cible prédéterminée, et
- le résonateur optique (100 ; 890a ; 890b) a en outre une fréquence de résonance qui correspond à une fréquence lumineuse (822) du laser de référence.

11. Système selon la revendication 10, dans lequel la longueur de l'entretoise (150 ; 892) est réglable sur au moins 40 μm

par augmentation ou diminution de la température de l'entretoise (150 ; 892) ; et/ou
par réglage de la longueur d'un élément piézoélectrique de l'entretoise (150 ; 892).

12. Système selon la revendication 10 ou 11, dans lequel
l'entretoise (150 ; 892) est substantiellement constituée d'un ou plusieurs matériaux ayant

- un coefficient de dilatation thermique supérieur à 16 ppm/°C,
- une rigidité supérieure à 10 GPa, et/ou
- une tangente d'amortissement supérieure à 0,001.

13. Système selon l'une quelconque des revendications 10 à 12, dans lequel
l'entretoise (150 ; 892) est constituée d'au moins 99,8 % de magnésium.

14. Système selon l'une quelconque des revendications 10 à 13, dans lequel

l'appareil comprend en outre un élément piézoélectrique (893) entre l'un des deux miroirs (891, 894) et l'entretoise (892), dans lequel
la distance entre les deux miroirs (891, 894) est réglable au moyen de l'élément piézoélectrique (893).

15. Système selon l'une quelconque des revendications 10 à 14, dans lequel

un premier miroir, qui est l'un desdits deux miroirs (120, 140 ; 891, 894), comporte une surface interne hautement réfléchissante et une surface externe faiblement réfléchissante ;
un deuxième miroir, qui est le miroir desdits deux miroirs (120, 140 ; 891, 894) qui n'est pas le premier miroir, comporte une surface interne hautement réfléchissante et une surface externe anti-réfléchissante ; et
le résonateur optique (100 ; 890a ; 890b) est constitué par la surface interne hautement réfléchissante du premier miroir et la surface interne hautement réfléchissante du deuxième miroir.

16. Système selon l'une quelconque des revendications 10 à 15, dans lequel
le circuit de contrôle est configuré pour régler la distance entre les deux miroirs (120, 140 ; 891, 894) à la longueur de stabilisation conformément à la fréquence d'un laser de référence.

17. Système selon l'une quelconque des revendications 10 à 16, dans lequel

l'appareil comprend une entrée optique pour alimenter (S240) la lumière d'entrée (710) et générer ainsi N signaux d'erreur (775a-775d) ; et dans lequel
le circuit de contrôle est configuré pour générer, sur la base des N signaux d'erreur (775a-775d), une rétroaction électronique (555) pour les N lasers (500).

18. Système selon l'une quelconque des revendications 10 et 17, comprenant en outre :
un ou plusieurs séparateurs de faisceau (520) pour séparer la lumière (510 ; 610) émise par les N lasers (500) en un premier faisceau (521) et un deuxième faisceau (522 ; 622a), dans lequel le deuxième faisceau (522) est la lumière d'entrée (710) à alimenter (S240) à l'appareil afin de générer N signaux d'erreur (775a-775d) ; et dans lequel :

- soit le circuit de contrôle est configuré pour stabiliser (S260) simultanément les N lasers (500) pour émettre de la lumière (510) aux fréquences de résonance respectives $f_i^R$, et le système comprend en outre un ou plusieurs décaleurs de fréquence (560) pour décaler les fréquences du premier faisceau (521) jusqu'aux fréquences prédéterminées respectives $f_i^S$ ;
- soit le circuit de contrôle est configuré pour stabiliser (S260) simultanément les N lasers (500) pour émettre de la lumière (610) aux fréquences prédéterminées respectives $f_i^S$, et le système comprend en outre un ou plusieurs décaleurs de fréquence (560) pour décaler les fréquences du deuxième faisceau (622a) jusqu'aux fréquences de résonance respectives $f_i^R$.

optical resonator 100

mirror distance 130

mirror 120

mirror 140

input light 160

output light 185

output light 180

standing wave 170

spacer 150

Fig. 1

EP 3 940 898 B1

adjusting S200 the distance between two mirrors of an optical resonator to a stabilization length

feeding S240 light from each of the $N$ lasers to the optical resonator and, thereby, generating $N$ error signals

stabilize S260 simultaneously the $N$ lasers based on the $N$ error signals

Fig. 2

cavity length

interval 330

Possible cavity lock lengths 340

interval 320

interval 310

optimal lock point 350

cavity transmission

Reference laser with frequency $f_{ref}$

slave laser 1 corresponding to predetermined frequency $f_1^S$

slave laser 2 corresponding to predetermined frequency $f_2^S$

Fig. 3

small, fast
piezo transducer 460

mirror 240

viton o-rings 480

spacer 450

mirror 220

Fig. 4

Fig. 5

Fig. 6

# stabilization system 550a

Fig. 7

## stabilization system 550b

Fig. 8a

EP 3 940 898 B1

Fig. 8b

Reflection

frequency (GHz)

755 440   755 450   755 460   755 470

Fig. 9b

HR 920 / AR 930

AR 900 / HR 910

Fig. 9a

Reflection

frequency (GHz)

755 440   755 450   755 460   755 470

Fig. 10b

HR 1020 / AR 1030

WR 1000 / HR 1010

Fig. 10a

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 103887700 B

**Non-patent literature cited in the description**

- **ERIC D. BLACK.** An introduction to Pound-Drever-Hall laser frequency stabilization. *Am. J. Phys.,* January 2001, vol. 69 (1